(19) Europäisches Patentamt
European Patent Office
Office européen des brevets

(11) **EP 2 973 237 B1**

(12) **EUROPEAN PATENT SPECIFICATION**

(45) Date of publication and mention
of the grant of the patent:
**10.07.2019 Bulletin 2019/28**

(51) Int Cl.:
***G06K 19/07*** (2006.01)

(21) Application number: **14723547.7**

(86) International application number:
**PCT/US2014/026101**

(22) Date of filing: **13.03.2014**

(87) International publication number:
**WO 2014/151611 (25.09.2014 Gazette 2014/39)**

(54) **EXCESS RADIO-FREQUENCY (RF) POWER STORAGE IN RF IDENTIFICATION (RFID) TAGS, AND RELATED SYSTEMS AND METHODS**

ÜBERSCHÜSSIGE HOCHFREQUENZ-ENERGIESPEICHERUNG IN RFID-ETIKETTEN SOWIE ENTSPRECHENDE SYSTEME UND VERFAHREN

STOCKAGE D'EXCÈS DE PUISSANCE RADIOFRÉQUENCE (RF) DANS DES ÉTIQUETTES D'IDENTIFICATION RF (RFID), ET SYSTÈMES ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201313837074**

(43) Date of publication of application:
**20.01.2016 Bulletin 2016/03**

(73) Proprietor: **Corning Incorporated
Corning, New York 14831 (US)**

(72) Inventors:
• **DOWNIE, John, David
Painted Post, NY 14870 (US)**
• **NEDERLOF, Leo
B-1880 Belgium (BE)**

• **SUTHERLAND, James, Scott
Corning, NY 14830 (US)**
• **TAYLOR, Mark, Peter
Montour Falls, NY 14865 (US)**
• **WAGNER, Richard, Edward
Painted Post, NY 14870 (US)**
• **WHITING, Matthew, Scott
Lawrenceville, PA 16929 (US)**

(74) Representative: **Midttun, Gisle Johan
Bryn Aarflot AS
Stortingsgata 8
0161 Oslo (NO)**

(56) References cited:
**US-A1- 2009 088 077     US-A1- 2011 147 468**

# Description

## PRIORITY APPLICATIONS

This application claims the benefit of priority under 35 U.S.C. § 120 of U.S. Application Serial No. 13/837074, filed on March 15, 2013, which claims priority to U.S. Provisional Patent Application Serial No. 61/710843, filed on October 8, 2012 and entitled "RF Power Storage And Sharing Between Connected RFID Tags," The present application is also a continuation-in-part application of U.S. Patent Application Serial No. 13/363,808 filed on February 1, 2012 and entitled "Radio Frequency Identification (RFID) Connected Tag Communications Protocol and Related Systems and Methods," which is a continuation-in-part application of U.S. Patent Application Serial No. 12/415,343, filed on March 31, 2009, and entitled "Components, Systems, and Methods for Associating Sensor Data With Component Location,". The present application is also a continuation-in-part application of U.S. Patent Application Serial No. 13/363,851 filed on February 1, 2012 and entitled "Protocol for Communications Between a Radio Frequency Identification (RFID) Tag and a Connected Device, and Related Systems and Methods," which is a continuation-in-part application of U.S. Patent Application Serial No. 12/415,343, filed on March 31, 2009, and entitled "Components, Systems, and Methods for Associating Sensor Data With Component Location,". The present application is also a continuation-in-part application of U.S. Patent Application Serial No. 13/363,890 filed on February 1, 2012 and entitled "Communications Between Multiple Radio Frequency Identification (RFID) Connected Tags and One or More Devices, and Related Systems and Methods," which is a continuation-in-part application of U.S. Patent Application Serial No. 12/415,343, filed on March 31, 2009, and entitled "Components, Systems, and Methods for Associating Sensor Data With Component Location,". The present application is also a continuation-in-part application of U.S. Patent Application Serial No. 13/418,752, filed on March 13, 2012 and entitled "Radio Frequency Identification (RFID) in Communication Connections, Including Fiber Optic Components," The present application is related to U.S. Patent Application Serial No. 61/710,843 filed on October 8, 2012 and entitled "RF Power Storage And Sharing Between Connected RFID Tags" The present application is also related to U.S. Patent Application Serial No. 11/590,377, filed on October 31, 2006 and entitled "Radio Frequency Identification Transponder For Communciating Condition Of A Component,"

## BACKGROUND

### Field of the Disclosure

The field of the disclosure relates to radio-frequency (RF) identification (RFID) tags, also referred to as transponders, and particularly to powering RFID tags from RF field energy.

### Technical Background

It is well known to employ radio frequency (RF) identification (RFID) transponders to identify articles of manufacture. RFID transponders are often referred to as "RFID tags." For example, a RFID system could be provided that includes one or more RFID tags. The RFID tags may include RF circuitry in the form of an integrated circuit (IC) chip that is communicatively coupled to an antenna. The IC chip may also be coupled to memory. An identification number or other characteristic is stored in the IC chip or memory coupled to the IC chip. The identification number can be provided to another system, such as the RFID reader, to provide identification information for a variety of purposes.

If the RFID tag is an "active" tag having a transmitter, the RFID tag can transmit the identification information to a RFID reader using power stored in the RFID tag. Thus, an active RFID tag contains its own power source, which is typically a battery, for powering an RF transmitter. In contrast, if the RFID tag is a "passive" tag, the RFID tag does not contain its own power source. Power to operate a passive RFID tag is received through energy contained in a wireless RF signal received by the RFID tag antenna. The wireless RF signal is transmitted by a transmitter in the RFID reader. A passive RFID tag harvests energy from the electro-magnetic field of the wireless RF signal to provide power to the IC for a passive RFID tag operation and for communications with the RFID reader. A passive RFID tag can respond to receipt of the wireless RF signal from an RFID reader, including by providing identification information stored in the passive RFID tag, such as via backscatter modulation communications, as an example. In either case of a passive or active RFID tag, the RFID reader may store information received from the RFID tag in a database and/or report the information to other systems outside the RFID system.

It may be desirable to provide a RFID system that can detect events for a plurality of RFID tags. It may be desired to detect these RFID tag events as they occur. In this example, the RFID tags may be equipped with event detection capability. For example, events may include connection of the RFID tag to another electrical component, connection of a connector housing the RFID tag to another connection, or activating a switch associated with the RFID tag, as non-limiting examples. Events may also include detecting environmental conditions, including but not limited to temperature, pressure, humidity, or light exposures, as non-limiting examples. Some conditions, including environmental conditions, may require the RFID tags to be equipped with a condition event sensor capable of detecting the condition. A RFID reader provided in the RFID system may communicate with the entire RFID tag population to determine which RFID tags detected an event and the type of event that occurred.

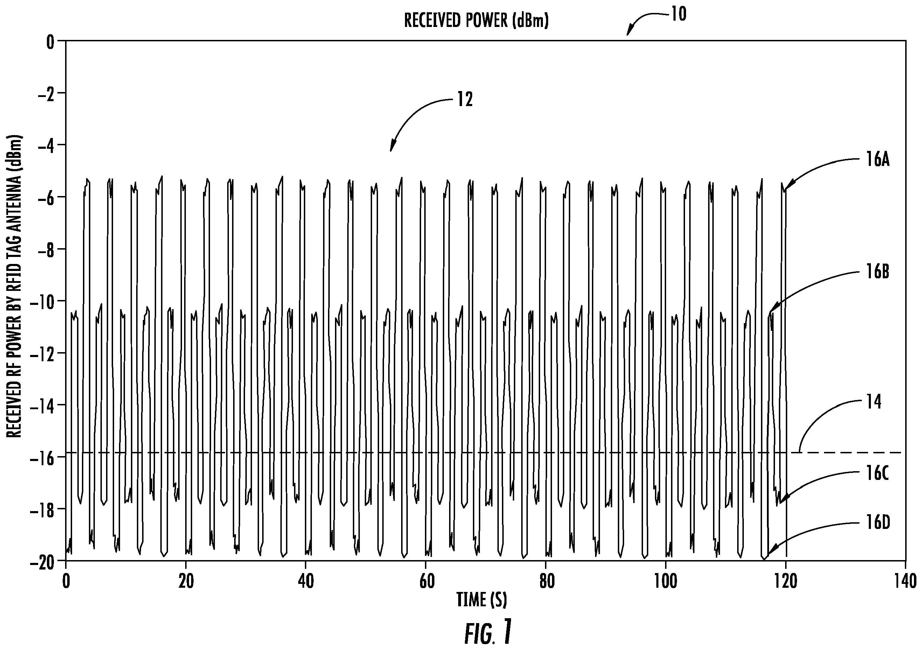

An important limitation of passive RFID tag technology is that when insufficient RF power is available from a reader, the RFID tag will be inactive. This is illustrated by example in **FIG. 1**. **FIG. 1** is a graph **10** illustrating RF power **12** received from a RFID reader by a RFID tag antenna of a RFID tag connection in decibels per meter (dBm) as a function of time (in seconds). A nominal threshold power is required to be received by the RFID tag antenna to turn on the RFID tag for operation. This is shown by power level line **14** in **FIG. 1** and is assumed to be -16 dBm. In **FIG. 1**, an RFID tag is experiencing received power fluctuations, because the RFID reader switches its signal among four different RFID reader antennas, with equal time devoted to each RFID reader antenna. The RFID reader changes RFID reader antennas about once per second. The four different levels of RF power received by the RFID tag antenna are illustrated in **FIG. 1** by power level **16A** (about -5 dBm), power level **16B** (about -10 dBm), power level **16C** (about -18 dBm) and power level **16D** (about -20 dBm), respectively, for the four RFID reader antennas. These different power levels occur because the RFID tag is located a different distance from each of the four RFID reader antennas.

However, as shown in **FIG. 1**, the RF power **12** received by the RFID tag antenna from the RFID reader may not always be at or above the nominal threshold power level **14**. As illustrated in **FIG. 1**, the received RF power **12** is below the nominal threshold power level **14** about one half of the time. This is also referred to as negative power margin for the RFID tag. As also illustrated in **FIG. 1**, the RF power **12** received by the RFID tag antenna from the RFID reader is above the nominal threshold power level **14** about one half of the time. This is also referred to as positive power margin for the RFID tag. Two of the received RF power levels **16C**, **16D** are below the nominal threshold power level **14** for operation of the RFID tag and experience negative power margin. Two of the received RF power levels **16A**, **16B** are above the nominal threshold power level **14** for operation of the RFID tag and experience positive power margin. The RFID tag will turn on and off as RFID tag experiences positive and negative power margin. This negative power margin experienced at times by a RFID tag can be a problem in various situations.

As one non-limiting example, negative power margin in a RFID tag can occur when the RFID tag is shadowed by objects or other RFID tags. Negative power margin can also occur when metal is in close proximity to the RFID tag causing an impedance mismatch between the RFID tag and its RFID tag antenna. Negative power margin can also occur when reflections of the RF field of wireless RF signals cause interference or a null in the region of the RFID tag. Negative power margin can also occur if a RFID reader transmits wireless RF signals at a frequency for which the RFID tag antenna of the RFID tag is unresponsive. Negative power margin can also occur due to a RFID reader switching between different RFID reader antennas. Negative power margin can also occur when a RFID reader switches to a RFID reader antenna that is located too far (i.e. out of range) from the RFID tag to provide sufficient RF power to the RFID tag. All of these exemplary conditions, and others, can lead to periods of time during which the RFID tag does not harvest enough RF power from the wireless RF signals to power the RFID tag, thus rendering the RFID tag inoperable.

Documents US 2011/0147468 A1 and US 2009/0088077 A1 disclose RFID tags including a rechargeable unit, e.g. charged to a predefined voltage.

## SUMMARY OF THE DETAILED DESCRIPTION

The invention provides radio-frequency identification (RFID) tags according to claim 1 and a method for providing power for radio-frequency identification (RFID) tag operation according to claim 12.

In this regard in one embodiment, a radio-frequency identification (RFID) tag is provided. The RFID tag comprises an integrated circuit (IC). The RFID tag also comprises an antenna electrically coupled to the IC, the antenna configured to receive RF power from received wireless RF signals. The RFID tag also comprises an energy storage device coupled to the IC. The RFID tag also comprises a power manager configured to receive the RF power received by the antenna. The power manager is also configured to operate the IC with the received RF power if the received RF power meets or exceeds an operational threshold power for the IC. The power manager is also configured to store excess energy derived from excess received RF power in the energy storage device, if the received RF power exceeds the operational threshold power for the IC. The power manager is also configured to access the stored energy in the energy storage device to provide power to operate the IC, if the received RF power from the antenna is less than the operational threshold power for the IC and when the RFID tag is not receiving wireless RF signals from a RFID reader.

In another embodiment, a method of providing power for radio-frequency identification (RFID) tag operation is provided. The method comprises receiving wireless RF signals including RF power by an antenna coupled to an integrated circuit (IC). The method also comprises operating the IC with the received RF power if the received RF power meets or exceeds an operational threshold power for the IC. The method also comprises storing excess energy derived from excess received RF power in the energy storage device if the received RF power exceeds the operational threshold power for the IC. The method may also comprise accessing the stored energy in the energy storage device to provide power to operate the IC if the received RF power from the antenna is less than the operational threshold power for the IC.

Related excess RFID tag power storage and power RFID tags and related RFID tag connections systems and methods are also disclosed herein that can employ the excess RF power storing RFID tags described above. The RFID tag connection system allows connected RFID tags to store excess energy derived from excess received RF power in a shared energy storage device. In this manner, an individual RFID tag or a group of connected RFID tags in the RFID tag connection system can continue operation during temporary times when sufficient RF power is not being received from a RFID reader. Sharing stored energy derived from excess received RF power in a shared energy storage device among connected RFID tags in a RFID tag connection system can significantly mitigate problems of RF power interruption.

The above-described aspects and features can provide improved system performance of an RFID reader and one or more RFID tags (particularly multiple RFID tags joined together) in terms of tag readability and operability. Particularly in an application that relies on continuous tag operability (even for a limited time, such as in the presence of a RFID reader, for example), and in which system degradation occurs whenever a RFID tag is not powered and operating, it is desired or may be required that all RFID tags maintain continuous power delivery to operate the RFID tag. The features of this disclosure, individually or in combination, can maximize the probability that any given RFID tag can maintain continuous operation by allowing excess harvested reader RF power during some periods to be available as stored energy to power the respective RFID tag during periods of insufficient reader RF power harvesting from a wireless RF signal from a RFID reader.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the embodiments. The accompanying drawings are included to provide a further understanding of the embodiments, and are incorporated into and constitute a part of this specification. The drawings illustrate various embodiments of the embodiments and together with the description serve to explain the principles and operation of the embodiments.

**BRIEF DESCRIPTION OF THE FIGURES**

FIG. 1 is a graph illustrating exemplary received RF power from a RFID reader by a RFID tag antenna of an exemplary RFID tag as a function of time;

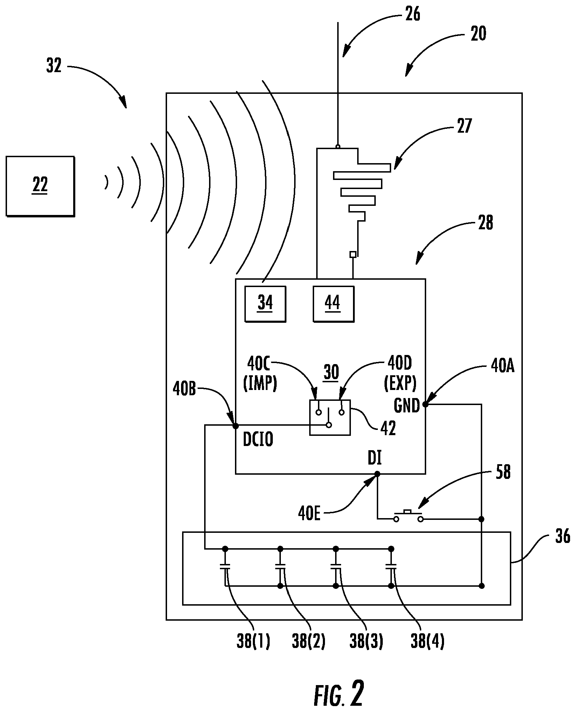

FIG. 2 is a schematic diagram illustrating an exemplary RFID tag configured to store excess energy derived from excess received RF power in an energy storage device when the RFID tag experiences positive power margin, and access stored energy in the energy storage device to provide power to operate the RFID tag when the RFID tag experiences negative power margin;

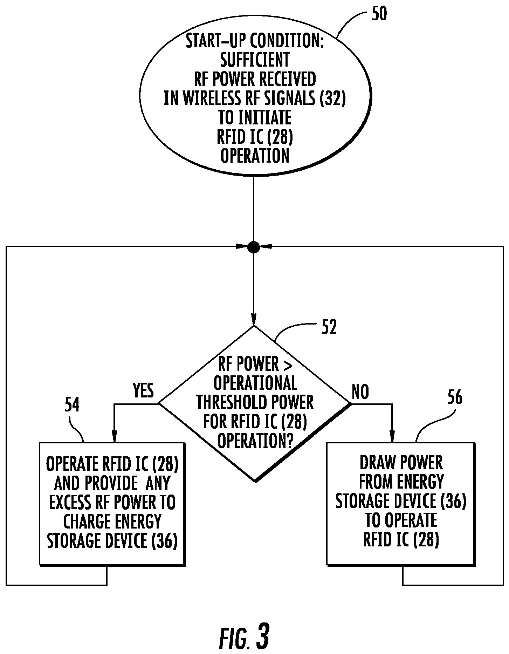

FIG. 3 is a flowchart illustrating an exemplary process of the RFID tag in FIG. 2 storing excess energy derived from excess received RF power in the energy storage device during positive power margin conditions, and accessing stored energy in the energy storage device to provide power to operate the RFID tag when sufficient RF power is not available for RFID tag operation during negative power margin conditions;

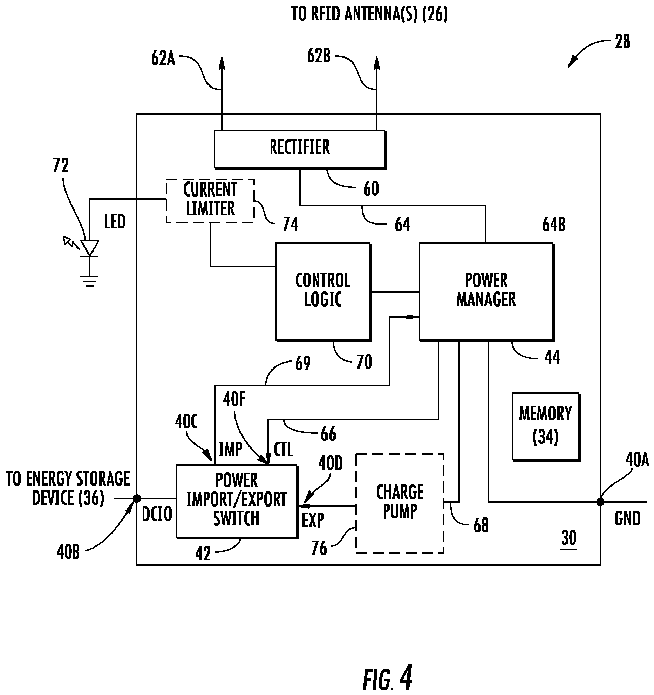

FIG. 4 is a schematic diagram of an exemplary RFID integrated circuit (IC) chip provided in the RFID tag in FIG. 2, wherein exemplary components involved with energy storage derived from excess received RF power and energy sharing provided in the RFID IC chip are illustrated;

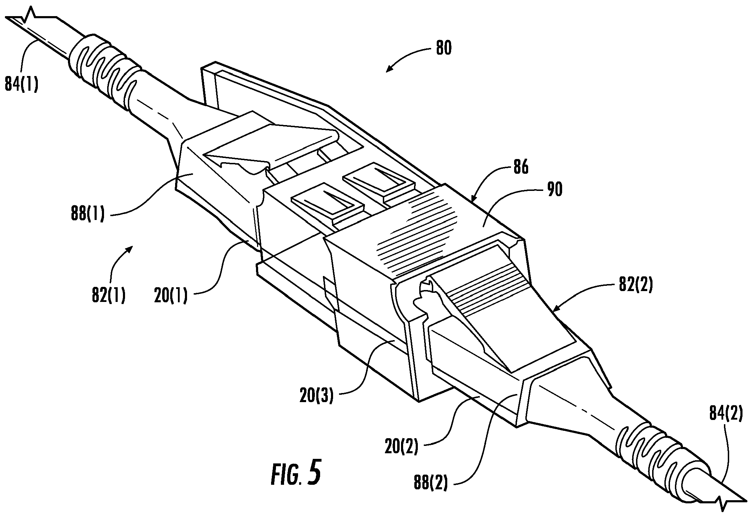

FIG. 5 illustrates a top perspective view of an exemplary excess RF power storage and power sharing RFID tag connection system comprised of two RFID tag-equipped duplex LC fiber optic connectors electrically connected at an intermediary RFID tag-equipped duplex LC fiber optic adapter;

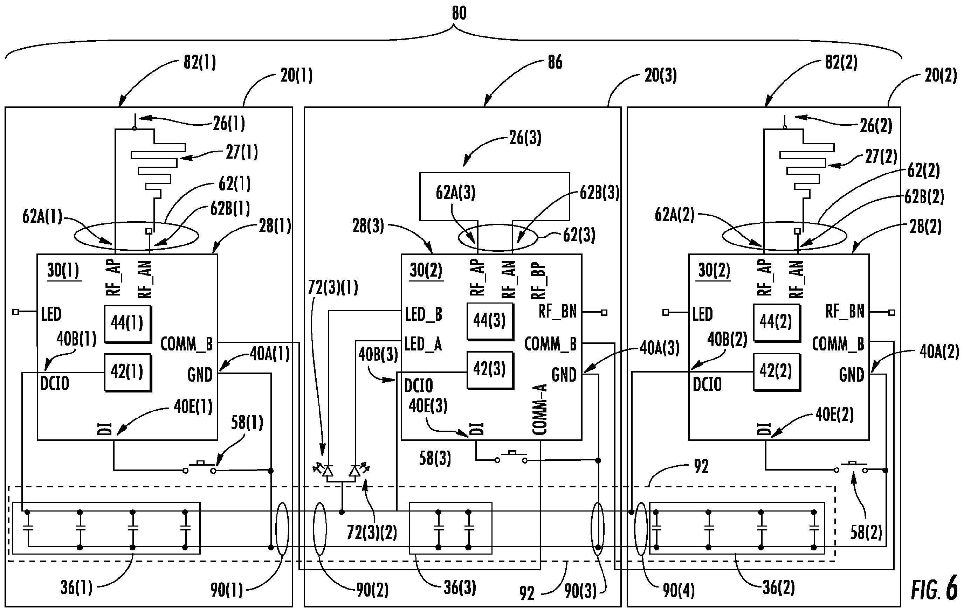

FIG. 6 is a schematic diagram illustrating an exemplary excess RF power storage and power sharing RFID tag connection system ("RFID tag connection system") that can be provided in the RFID tag connection system of FIG. 5, the RFID tag connection system comprised of three exemplary electrically connected RFID tags, wherein the RFID tags are configured to store excess energy derived from excess received RF power in shared energy storage devices when the RFID tag experiences positive power margin, and accessing stored energy in the shared energy storage device to provide power to operate a RFID tag(s) when the RFID tag(s) experiences negative power margin;

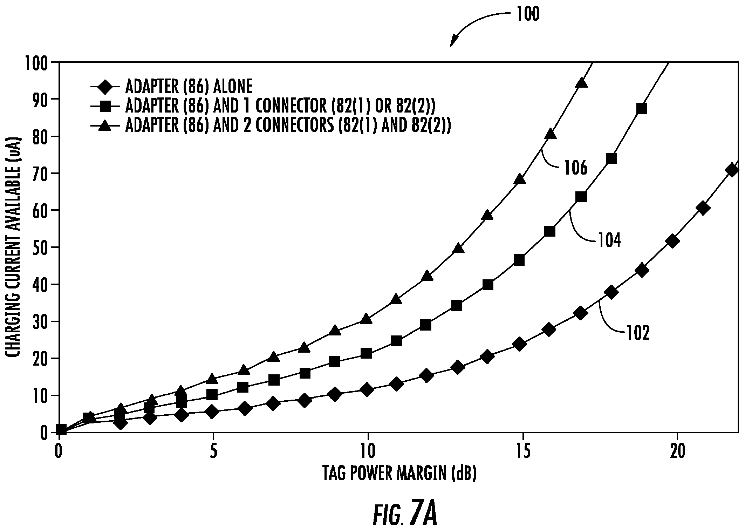

FIG. 7A is a graph illustrating exemplary charging current available to charge capacitors in the shared energy storage device in the RFID tag connection system in FIGS. 5 and 6 as a function of RFID tag power margin, for certain connection combinations of the RFID tags, when a charge pump is employed in the RFID tags to increase the voltage attainable across the shared energy storage devices;

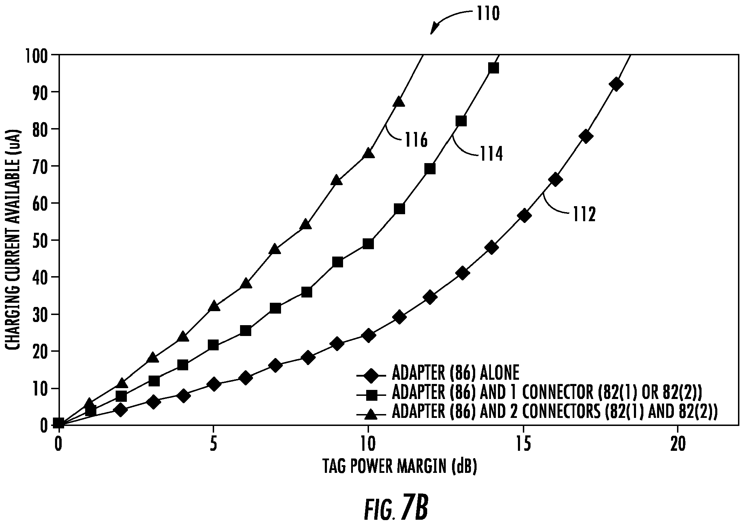

FIG. 7B is a graph illustrating exemplary charging current available to charge capacitors in the shared energy storage device in the RFID tag connection system in FIGS. 5 and 6 as a function of RFID tag power margin, for certain connection combinations of the RFID tags, when a charge pump is not employed in the RFID tags;

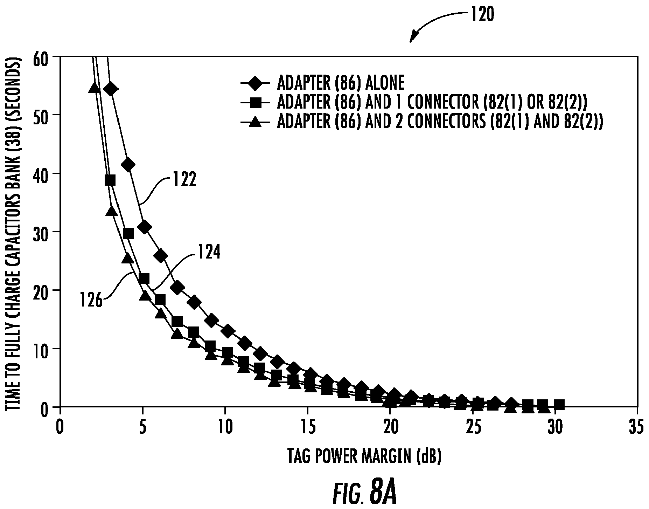

**FIG. 8A** is a graph illustrating exemplary times to fully charge capacitor banks in the shared energy storage device in the RFID tag connection system in **FIGS. 5** and **6** at start-up as a function of RFID tag power margin, for certain connection combinations of the RFID tags, when a charge pump is employed in the RFID tags;

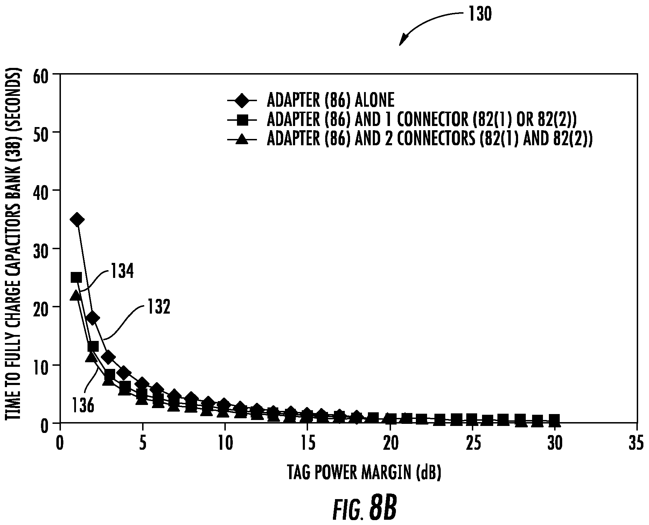

**FIG. 8B** is a graph illustrating exemplary times to fully charge capacitor banks in the shared energy storage device in the RFID tag connection system in **FIGS. 5** and **6** at start-up as a function of RFID tag power margin, for certain connection combinations of the RFID tags, when a charge pump is not employed in the RFID tags;

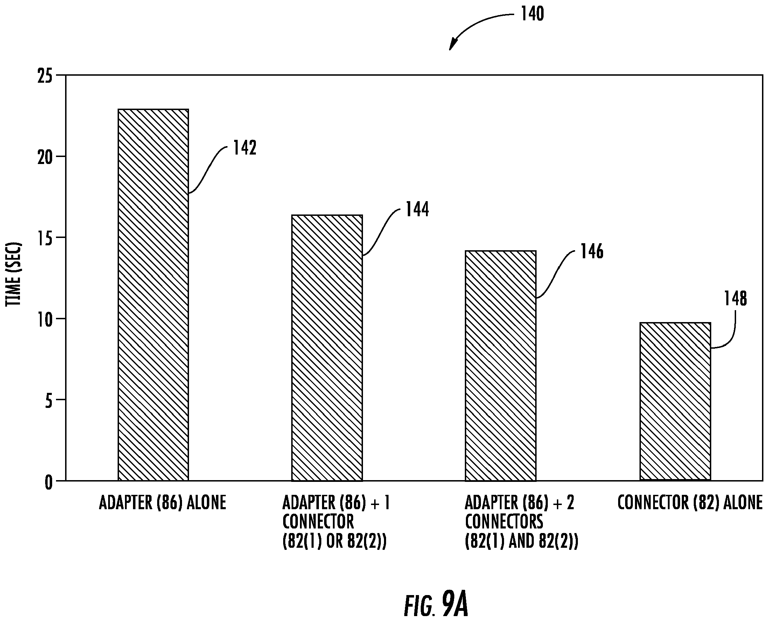

**FIG. 9A** is a graph illustrating exemplary times that certain connection combinations of RFID tags in the RFID tag in **FIG. 2** and the RFID tag connection system in **FIGS. 5** and **6** can remain operational after losing RF power by accessing stored energy from the shared energy storage device, when a charge pump is employed in the RFID tags;

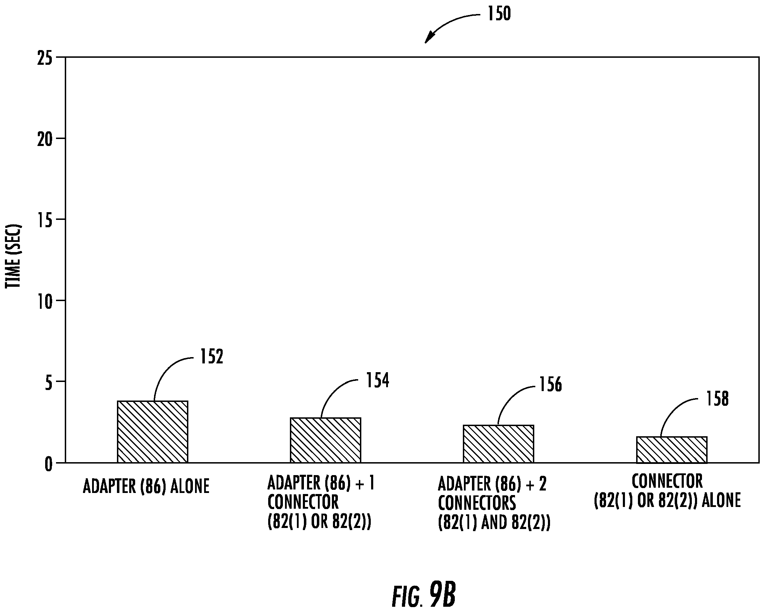

**FIG. 9B** is a graph illustrating exemplary times that certain connection combinations of RFID tags in the RFID tag in **FIG. 2** and the RFID tag connection system in **FIGS. 5** and **6** can remain operational after losing RF power by accessing stored energy from the shared energy storage device, when a charge pump is not employed in the RFID tags;

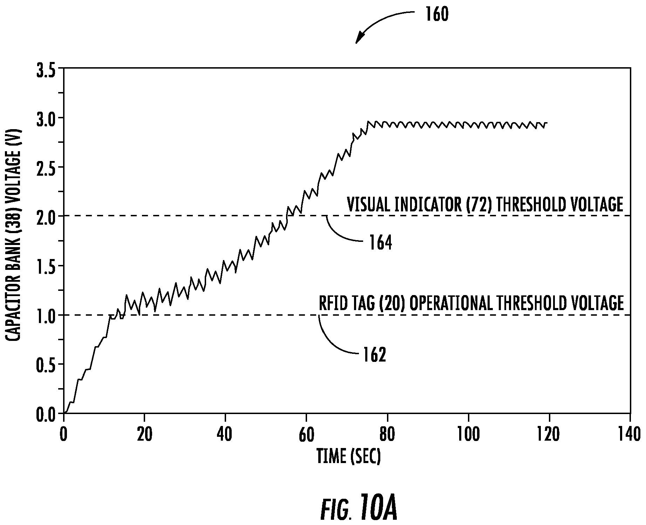

**FIG. 10A** is a graph illustrating exemplary capacitor bank voltage as a function of time for a single RFID tag, such as the RFID tag in **FIG. 2**, from startup of the RFID tag during positive power margin times of the RFID tag, when a charge pump is employed in the RFID tag;

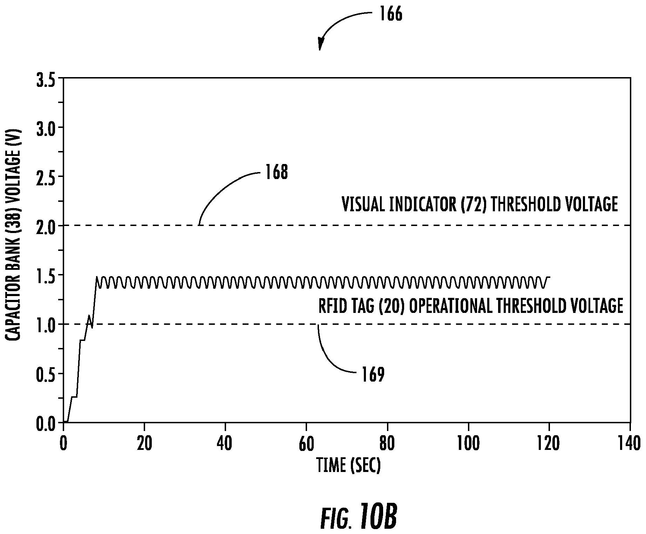

**FIG. 10B** is a graph illustrating exemplary capacitor bank voltage as a function of time for a single RFID tag, such as the RFID tag in **FIG. 2**, from startup of the RFID tag during positive power margin times of the RFID tag, when a charge pump is not employed in the RFID tag;

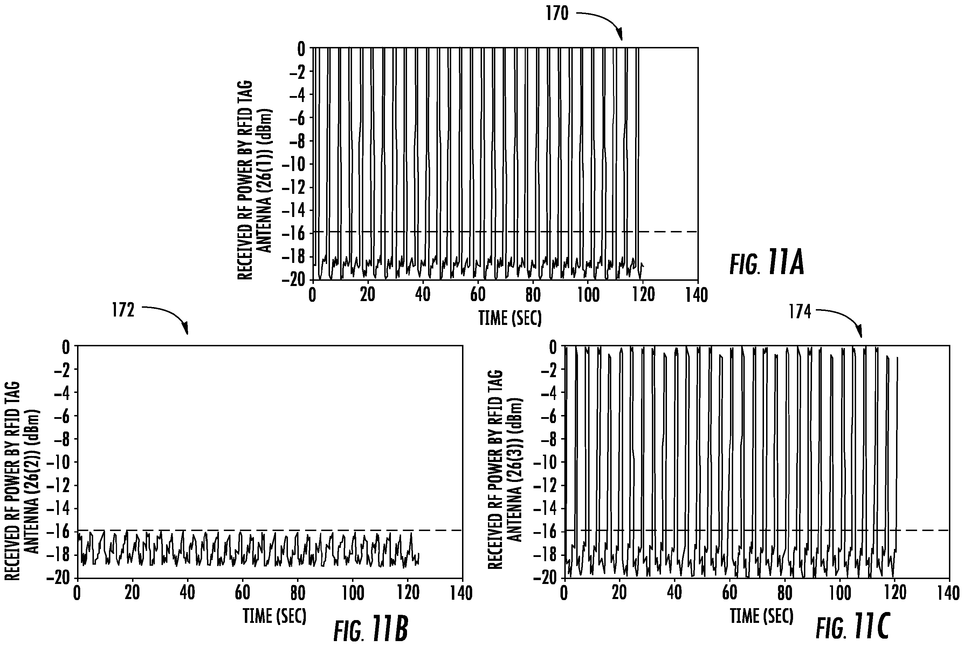

**FIGS. 11A-11C** are graphs illustrating exemplary received RF power by RFID tag antennas of three exemplary electrically connected RFID tags as a function of time in the RF power storage and power sharing in the RFID tag connection system of **FIGS. 5** and **6**;

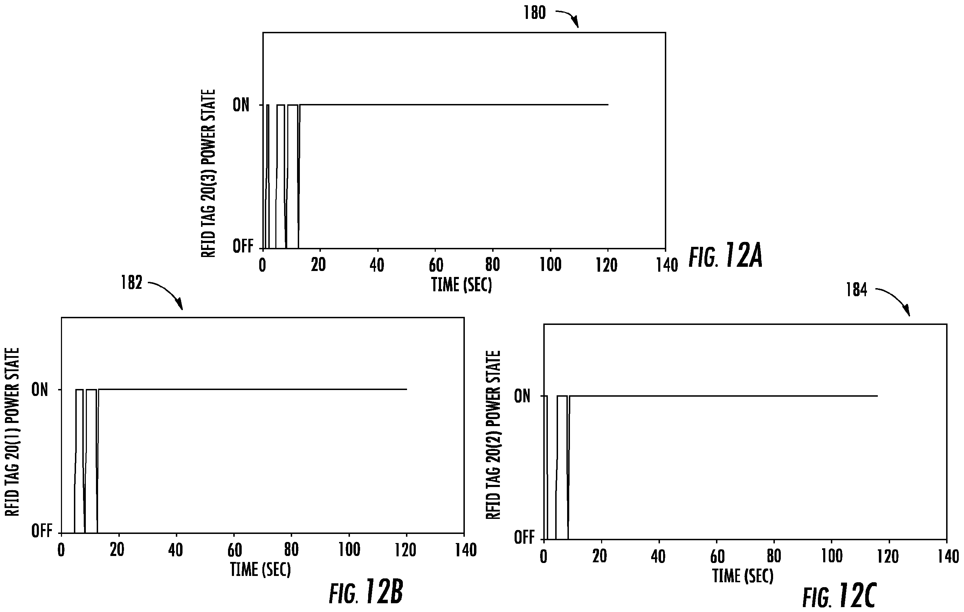

**FIGS. 12A-12C** are graphs illustrating exemplary on/off states of three exemplary electrically connected RFID tags as a function of time when the excess RF power storage and power sharing in the RFID tag connection system of **FIGS. 5** and **6** is employed;

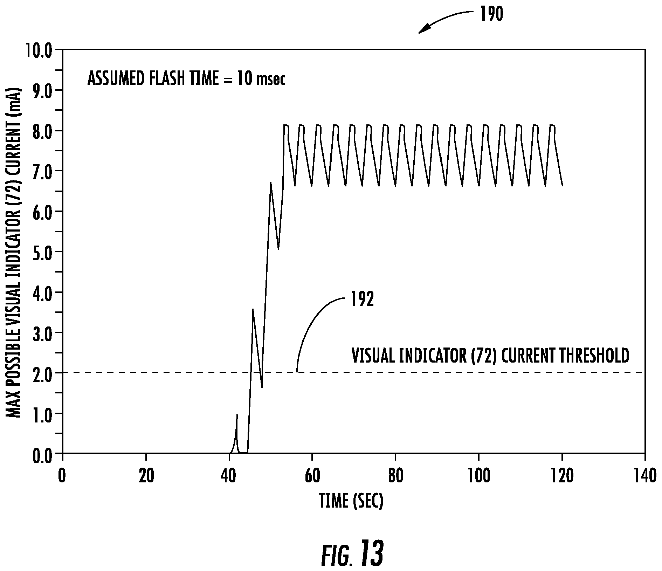

**FIG. 13** is a graph illustrating exemplary possible current available to power a visual indicator of the RFID tag in **FIG. 2**; and

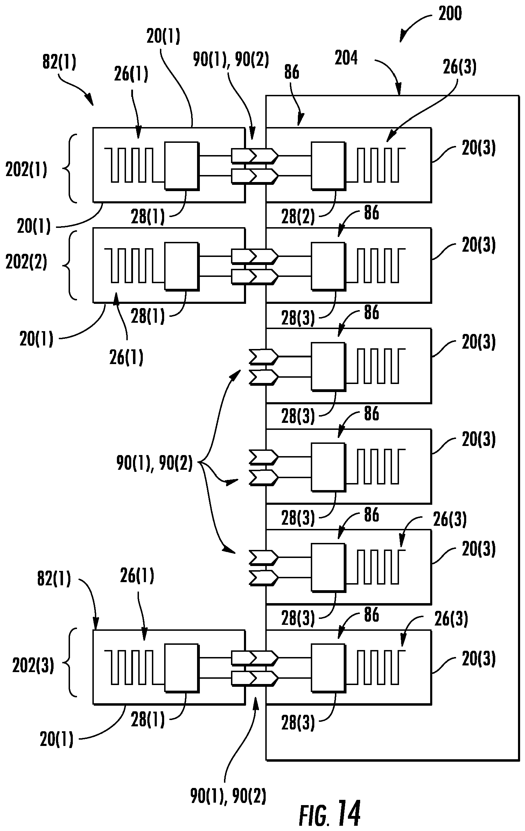

**FIG. 14** is a schematic diagram of exemplary application that includes excess RF power storage and power sharing RFID tag connection systems.

## DETAILED DESCRIPTION

Reference will now be made in detail to the embodiments, examples of which are illustrated in the accompanying drawings, in which some, but not all embodiments are shown. Indeed, the embodiments may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed herein include excess radio-frequency (RF) power storage in RF identification (RFID) tags, and related systems and methods. The RFID tag is configured to be powered from received RF power in wireless RF signals if the received RF power meets or exceeds an operational threshold power for the RFID tag. The RFID tag is also further configured to store excess RF energy from RF power in the received wireless RF signals exceeding the operational threshold power for the RFID tag in an energy storage device. In this manner, when the received RF power from the RFID tag antenna does not contain sufficient power to operate the RFID tag, the RFID tag can operate from power previously stored in the energy storage device.

Related excess RFID tag power storage and power sharing RFID tags, and related RFID tag connections systems and methods are also disclosed herein that can employ the excess RF power storing RFID tags described above. The RFID tag connection system allows connected RFID tags to store excess energy derived from excess received RF power in a shared energy storage device. In this manner, an individual RFID tag or a group of connected RFID tags in the RFID tag connection system can continue operation during temporary times when sufficient RF power is not being received from a RFID reader. Sharing stored energy derived from excess received RF power in a shared energy storage device among connected RFID tags in a RFID tag connection system can significantly mitigate problems of RF power interruption.

In this regard, **FIG. 2** is a schematic diagram illustrating an exemplary RFID tag **20** configured to store excess energy derived from excess received RF power from a RFID reader **22** in an energy storage device **36** when the RFID tag **20** experiences positive power margin. As will also be discussed below, the RFID tag **20** in **FIG. 2** is also configured to access stored energy in the energy storage device **36** to provide power to operate the RFID tag **20** when the RFID tag **20** experiences negative power margin. The RFID tag **20** may be a passive RFID tag, semi-active RFID tag, or active RFID tag. However, the excess RF power storage and energy access features of the RFID tag **20** may be particularly useful for passive RFID tags that require external RF power to be received by a RFID tag antenna **26** (or "antenna **26**") of the RFID tag **20**. The RFID tag antenna **26** in **FIG. 2** is a monopole antenna. However, the RFID tag antenna **26** can be any type of antenna desired, including but not limited to a monopole antenna, a dipole antenna, a slot antenna, and a loop antenna. An optional matching network **27** may also be included to provide impedance matching between the RFID tag antenna **26** and the RFID tag **20**, if needed or desired.

Positive power margin (i.e., excess power) for the RFID tag **20** is a function of the output power of the wireless RF signals received by the RFID tag **20** from the RFID reader **22** minus the RF power required to turn on the RFID IC **28**. For example, the Federal Communications Commission (FCC) limits output power delivered to a RFID reader antenna to thirty (30) dBm (for antenna gain < 6 dBi), or 1 Watt (W). There will be losses present between the RFID reader **22** antenna and the RFID tag antenna **26** that govern the level of RF power reaching the RFID tag **20**. Experimentally, the power margin of a RFID tag in a given system is measured by gradually increasing the RFID reader output power and determining the minimum output power at which the RFID tag first turns on and is able to communicate with the RFID reader. For example, consider the RFID tag **20** that is first detected by the RFID reader **22** when the RFID reader **22** output power is at 17 dBm during a power margin measurement. In this example, the power margin of the RFID tag **20** would be 13 dB (30 dB - 17 dB). This means the RFID tag **20** would experience an RF field strength 13 dB higher than required for operation in this example, which is positive power margin.

With continuing reference to **FIG. 2**, the RFID tag antenna **26** of the RFID tag **20** is electrically coupled to a RFID integrated circuit (IC) **28** (or "IC **28**"). For example, the RFID IC **28** may be provided in the form of an RFID IC chip **30**. The RFID IC **28** contains circuitry for operation of the RFID tag **20**, including receiver circuitry configured to receive wireless RF signal **32** transmitted by the RFID reader **22**. The wireless RF signals **32** are received by the RFID tag antenna **26** if the RFID tag antenna **26** is in transmission range of the RFID reader **22** and the RFID tag antenna **26** is configured to receive a signal frequency or signal frequencies of the wireless RF signals **32**. The RFID IC **28** may also contain memory **34** that can be used to store information relating to the RFID tag **20**, such as identification information or other information desired. This information can be communicated by the RFID tag **20** to the RFID reader **22** for any use or purpose desired. The RFID IC **28** may also be configured to store other information in memory **34** and communicate this information associated with the RFID tag **20** or components associated with the RFID tag **20**.

The RFID tag **20** in **FIG. 2** requires a certain amount of power to turn on the RFID IC **28**. In this regard, the RFID tag **20** is configured to use RF power contained in the wireless RF signals **32** received by the RFID tag antenna **26** of the RFID tag **20** for operational power. The RF power can be provided to the RFID IC **28** to provide power for RFID tag **20** operation. If the RFID tag **20** is a passive RFID tag, the RF power received in the wireless RF signals **32** is the only form of external power provided to the RFID tag **20** for operation. In this example, power for RFID tag **20** operation must be at or above an operational threshold power for the RFID IC **28**. The RFID IC **28** may also require a defined minimum threshold voltage to be turned on for operation. As an example, the minimum threshold voltage to turn on the RFID IC **28** may be 1.0 Volt (V) as a non-limiting example. When RF power from the received wireless RF signals **32** is sufficient to meet or exceed the operational threshold power for the RFID IC **28**, the RFID tag **20** is operational. However, if the RF power from the received wireless RF signals **32** does not meet or exceed the operational threshold power for the RFID IC **28**, the RFID IC **28** cannot be turned on for RFID tag **20** operation unless another power source is provided.

In this regard as illustrated in **FIG. 2**, the energy storage device **36** is provided in the RFID tag **20**. The capacitor bank **38** of the energy storage device **36** is configured to store excess energy derived from received RF power from the received wireless RF signals **32** in excess of RF power consumed to turn on and operate the RFID IC **28**. This excess energy that can be stored in the energy storage device **36** of the RFID tag **20** during positive power margin conditions is also referred to herein as "excess received RF power." If the RFID tag **20** is a semi-active RFID tag that contains a battery for operation, the energy storage device **36** could be or include a battery of semi-passive RFID tag, which could be charged (e.g., trickle charged) from the excess received RF power. The RF power needed to turn on and operate the RFID tag **20** is known as the operational threshold power for the RFID tag **20**. Thus, when wireless RF signals **32** are not being received by the RFID tag **20** or the RF power in the received wireless RF signals **32** is not sufficient to turn on and operate the RFID IC **28**, a "negative power margin" condition exists in the RFID tag **20**. In this scenario, stored energy previously stored in the capacitor bank **38** during positive power margin conditions of the RFID tag **20** can be accessed to provide power to turn on and/or maintain an existing operational state of the RFID tag **20**.

With continuing reference to **FIG. 2**, the energy storage device **36** may be or include a capacitor bank **38**. The capacitor bank **38** can include one or more capacitors. The capacitor bank **38** in this example in **FIG. 2** includes four capacitors **38(1)-38(4)**, each of 4.7 microFarads (μF), which are provided and connected in parallel to form the capacitor bank **38**. In this embodiment, the capacitor bank **38** is electrically connected on one side to ground node **40A** and on the other side to DC input / output (DCIO) power node **40B** which is connected to power import/export switch **42**. Thus, when wireless RF signals **32** are being received by the RFID tag **20** with sufficient power to turn on the RFID tag **20** and excess power exists, a "positive power margin" condition exists in the RFID tag **20**. In this scenario, the power import/export switch **42** connects the capacitor bank **38** to export node (EXP) **40D** to store the excess energy derived from the received excess RF power in the capacitor bank **38**. However, when wireless RF signals **32** are not being received by the RFID tag **20**, or the RF power in the received wireless RF signals **32** is not sufficient to turn on and operate the RFID tag **20**, a "negative power margin" condition exists in the RFID tag **20**. In this scenario, the energy previously stored in the capacitor bank **38** during positive power margin conditions can be accessed to provide power to turn on and/or maintain an existing operational state of the RFID tag **20** when power import/export switch **42** is set to connect the capacitor bank **38** to import node (IMP) **40C**. In this regard, the power import/export switch **42** may a single pole, double throw switch to switch between import node **40C** and export node **40D**, as a non-limiting example.

Note that in **FIG. 2** as discussed above, multiple capacitors **38(1)-38(4)** are provided and disposed in parallel to each other in the capacitor bank **38**. There may be several reasons to provide multiple capacitors in a capacitor bank **38**. A single capacitor of desired capacitance may not be available. Also, it may be more feasible to provide several smaller capacitors to form a total desired capacitance of the capacitance bank **38** due to packaging or other geometric limits or considerations. Also, it may be desired to provide multiple capacitors coupled in parallel to provide the total capacitance of a given capacitor bank **38** for redundancy purposes. In this manner, if any capacitor **38(1)-38(4)** in the capacitor bank **38** fails to open, the other capacitors **38(1)-38(4)** may still be operational in the energy storage device **36** to store excess energy during positive power margin conditions and provide access to stored energy during negative power margin conditions.

The ability of the RFID tag **20** in **FIG. 2** to turn on and/or maintain operability during negative power margin conditions can be important depending on the application employing the RFID tag **20**. For example, the RFID tag **20** can be shadowed by objects or other RFID tags causing the RFID tag **20** to not receive the wireless RF signal **32** or wireless RF signals **32** containing insufficient RF power for RFID tag **20** operation. As another example, metal in close proximity to the RFD tag **20** could cause an impedance mismatch between the RFID tag **20** and its RFID tag antenna **26**, thereby reducing RF power received by the RFID tag antenna **26**. Negative power margin conditions can also occur due to reflections of a RF field, which can cause interference or a signal reception null in the region of the RFID tag **20**. Negative power margin conditions can also occur if the RFID reader **22** transmits the wireless RF signals **32** at a frequency for which the RFID tag antenna **26** is unresponsive. Negative power margin conditions can also occur due to a RFID reader switching between different RFID reader antennas. Negative power margin conditions can also occur when a RFID reader switches to a RFID reader antenna that is located too far (i.e., out of RF range) from the RFID tag to provide sufficient RF power to the RFID tag. All of these negative power margin conditions can lead to periods of time during which the RFID tag **20** does not harvest enough RF power from the wireless RF signals **32** to sufficiently power the RFID tag **20** for operation.

The RFID IC **28** can be provided with capability of managing RF power during positive and negative power margin conditions. In this regard with continuing reference to **FIG. 2**, a power manager **44** is provided in the RFID IC **28** in this example of the RFID tag **20**. The power manager **44** is circuitry configured to manage power for operation of the RFID tag **20**. The power manager **44** receives the RF power contained in the wireless RF signals **32** received by the RFID tag antenna **26** and controls the RF power for operating the RFID tag **20**. Note that more than one RFID tag antenna may be provided if desired. The power manager **44** is configured to control the storage of excess energy derived from excess received RF power from the received wireless RF signals **32** in the energy storage device **36** during positive power margin conditions. The power manager **44** is also configured to control the access of energy previously stored in the energy storage device **36** to provide operational power to the RFID tag **20** when sufficient RF power is not available for RFID tag **20** operation in negative power margin conditions. In this regard, **FIG. 3** is a flowchart illustrating an exemplary process of the power manager **44** in the RFID tag **20** in **FIG. 2** to manage power for the RFID tag **20**.

In this regard as illustrated in **FIG. 3**, the process begins in a start-up condition. In the start-up condition, the RFID tag **20** has not been previously powered for operation, or has been inoperable for a period of time after the power remaining in the energy storage device **36** is insufficient to maintain operability of the RFID IC **28**. During the start-up condition, the RFID tag antenna **26** of the RFID tag **20** receives RF power in received wireless RF signals **32** sufficient to initiate operation of the RFID tag **20** in a positive power margin condition (block **50**). The start-up of the RFID tag **20** can only occur when the RFID tag **20** is in a positive power margin condition, because the RFID tag **20** has to first be operational before the power manager **44** can operate to store excess energy derived from excess received RF power in the energy storage device **36** and access stored energy from the energy storage device **36**.

With continuing reference to **FIG. 3**, after the start-up condition for the RFID tag **20** has occurred (block **50**), the power manager **44** in the RFID IC **28** is operational. The power manager **44** determines if the RF power in the received wireless RF signals **32** is sufficient for RFID tag **20** operation, meaning a positive power margin condition exists (block **52**). The power manager **44** may be configured to determine if the received RF voltage and/or current in the received wireless RF signals **32** is sufficient for RFID tag **20** operation, meaning a positive power margin condition exists (block **52**). For example, as previously discussed above, the power manager **44** can determine if the RF power in the received wireless RF signals **32** meets or exceeds the operational threshold power for the RFID tag **20**. The voltage level of the RF power in the received wireless RF signals **32** may be used by the power manager **44** to determine whether the received RF power meets or exceeds the operational threshold of the RFID tag 20, because a minimum voltage may be required to turn on the RFID tag 20.

After RFID tag 20 start-up, the RF power in the received wireless RF signals 32 should initially meet or exceed the operational threshold power for the RFID tag 20. This is because the start-up condition occurs when sufficient power cannot be accessed (i.e., drawn) from the energy storage device 36 for RFID tag 20 operation. In this instance, the power manager 44 operates the RFID IC 28 with the RF power in the received wireless RF signals **32** (block **54**). Any excess energy in the received RF power beyond the power needed to operate the RFID IC **28** (i.e., in excess of the operational threshold power for the RFID tag **20**) is stored in the energy storage device **36** by the power manager **44** setting power import/export switch **42** in **FIG. 2** to connect the energy storage device **36** to export node **40D**. The power import/export switch **42** may be provided as part of the RFID IC **28** as shown in **FIG. 2**, or external to the RFID IC **28**. As previously discussed, excess energy derived from excess received RF power and stored in energy storage device **36** during positive power margin conditions can be accessed during negative power margin conditions to allow for continued RFID tag **20** operation.

With continuing reference to **FIG. 3**, the power manager **44** continues to determine if RFID tag **20** is in a positive power margin condition (block **52**). The power manager **44** determines if the RF power in the received wireless RF signals **32** is sufficient for RFID tag **20** operation, meaning a positive power margin condition exists (block **52**). If the power manager **44** determines that the RFID tag **20** is in negative power margin condition (block **52**), the power manager **44** sets the power import/export switch **42** in **FIG. 2** to connect the energy storage device **36** to import node **40C** to access stored energy (e.g., current) stored in the energy storage device **36** to provide power for continued RFID tag **20** operation (block **56**). The power manager **44** continues to determine if RFID tag **20** is in a positive power margin condition to store excess energy derived from excess received RF power in the energy storage device **36** (block **54**); or in a negative power margin condition (block **52**) to access stored energy in the energy storage device **36** (block **56**) to provide power for continued RFID tag **20** operation. If energy stored in the energy storage device **36** is ever completely drained for RFID tag **20** operation, the RFID tag **20** will become idle in this embodiment. The RFID tag **20** can become operational again as a result of the start-up condition described above wherein RF power from received wireless RF signals **32** is sufficient to operate the RFID tag **20** (block **50**).

With reference back to **FIG. 2**, the RFID tag **20** may also include an optional condition responsive device **58** that is coupled between the GND node **40A** and a digital input (DI) node **40E**. The condition responsive device **58** may provide an alternative method of accessing stored energy in the energy storage device **36** to provide power to the RFID tag **20**. For example, if the condition responsive device **58** is a push button switch, it may be desired to provide the condition responsive device **58** to allow a technician to activate the switch to provide power from stored energy in the energy storage device **36**. The stored energy may be used to provide power to turn on the RFID tag **20** and/or any of its components (e.g., the visual indicator described below), when desired by a technician in addition to the power control provided by the power manager **44** for the RFID tag **20**. The condition responsive device **58** may also be any other type of switch that can sense a condition about or relating to the RFID tag **20**, including environmental, operational, and contact conditions. Non-limiting examples of environmental conditions include temperature, humidity, pressure, light exposure, resistance, inductance, and/or capacitance. Non-limiting examples of operational conditions include the status of the RFID tag **20**, and resistance, inductance, and/or capacitance associated with the RFID tag 20. Non-limiting examples of contact conditions include contact of a component, such as a switch, associated with the RFID tag **20**, touching the RFID tag **20**, and connection of a component associated with the RFID tag **20** to another device or component.

With continuing reference to **FIG. 2**, the condition responsive device **58** could also be configured to indicate the occurrence of a condition or event to the IC **28**. The IC **28** of the RFID tag **20** could be configured to report the occurrence of the detected condition or event by activation of the condition responsive device **58** to the RFID reader **22**. For example, the RFID reader **22** may log the condition and/or provide information to the technician in connection with the RFID tag **20**, such as a proper connection between a component carrying the RFID tag **20** and another component. Because the energy storage device **36** is provided, the RFID tag **20** can be configured to be powered from the energy storage device **36** to detect and report the occurrence of a detected condition even when the RFID tag antenna **26** is not receiving sufficient RF power to operate the RFID tag **20** and detect and report the occurrence of the detected condition. More information regarding this example is provided in U.S. Patent Application No. 11/590,377 entitled "Radio Frequency Identification Transponder For Communciating Condition Of A Component," which is incorporated herein by reference in its entirety.

To further explain exemplary components that may be provided in the RFID IC **28** of the RFID tag **20** to provide excess RF power storage and the operations in **FIG. 3**, **FIG. 4** is provided. **FIG. 4** is a schematic diagram of exemplary internal components of the RFID IC chip **30** provided in the RFID tag **20** in **FIG. 2**. In this embodiment, the RFID IC chip **30** contains a power rectifier **60** configured to rectify RF power received in the wireless RF signal **32** by the RFID tag antenna **26**. The power rectifier **60** is coupled to antenna pins **62A** and **62B**, which are coupled to the RFID tag antenna **26** shown in **FIG. 2**. The RF power rectified by the power rectifier **60** is provided over power communications line **64** to the power manager **44**. The power manager **44** can be configured to operate the IC **28** with rectified voltage from the power rectifier **60** if the rectified voltage meets or exceeds an operational threshold voltage for the IC **28**. The power manager **44** can also be configured operate the IC **28** with current derived from the power rectifier **60** if the current meets or exceeds an operational threshold current for the IC **28**.

With continuing reference to **FIG. 4**, the power manager **44** is configured to control the distribution of the RF power received from the power rectifier **60** according to exemplary operation described above in **FIG. 3**. As previously discussed above in **FIG. 3**, the power manager **44** controls the power import/export switch **42** to control storage of excess energy derived from excess received RF power in the energy storage device **36** (block **54** in **FIG. 3**) and access stored energy from the energy storage device **36** (block **56**), respectively, for continued RFID tag **20** operation (block **56**). For example, the power manager **44** can be configured to control the power import/export switch **42** to store excess energy in the energy storage device **36** when the voltage derived from the excess received RF power exceeds an operational threshold voltage for the IC **28**. Alternatively, the power manager **44** can configured to control the power import/export switch **42** to store excess energy in the energy storage device **36** when the current derived from the excess received RF power exceeds an operational threshold current for the IC **28**.

A control line **66** is provided between the power manager **44** and the power import/output switch **42** in this embodiment. The power manager **44** communicates a signal over control line **66** to a control node **40F** to control whether the power import/export switch **42** is set to connect export node **40D** to the energy storage device **36** to store excess energy derived from excess received RF power, or set to connect import node **40C** to the energy storage device **36** to access stored energy from the energy storage device **36** for RFID tag **20** operation. Excess energy derived from excess received RF power is provided from the power manager **44** over power supply line **68** to the power import/export switch **42** to be directed to and stored in the energy storage device **36**. Accessed energy from the energy storage device **36** to provide power is provided from the power import/export switch **42** over power access line **69** to the power manager **44** to be distributed to components of the RFID IC chip **30** to power the RFID tag **20**. For example, the power manager **44** can be configured to access stored excess energy in the energy storage device **36** if a voltage derived from the received RF power is less than an operational threshold voltage for the IC **28**. Alternatively, the power manager **44** can be configured to access stored excess energy in the energy storage device **36** if a current derived from received RF power is less than the operational threshold current for the IC **28**.

With continuing reference to **FIG. 4**, control logic **70** is also provided in the RFID IC chip **30** and is coupled to the power manager **44**. The control logic **70** is also configured to access received RF power from the power manager **44** to operate optional visual indicator **72** if sufficient RF power is present for operation. The control logic **70** may be configured to access received RF power from the power manager **44** to operate only the visual indicator **72**, only the RFID IC **28**, or both the visual indicator **72** and the RFID IC **28**, based on design and configuration of the power manager **44**. In one embodiment, the power manager **44** uses received RF power to power the RFID IC **28** as higher priority over the visual indicator **72**. The power manager **44** is configured to direct RF power received from wireless RF signal **32** in positive power margin conditions and access stored energy from the energy storage device **36** in negative power conditions, as previously described. The visual indicator **72** may be provided to allow the RFID tag **20** to provide visual indications of status or other information to a human user or technician for any purpose or application desired. The visual indicator **72** may be a light emitting diode (LED) as a non-limiting example. Also, the visual indicator **72** may be activated to emit light in patterns, such as flashing, and in different periodicities, to indicate different statuses. The visual indicator **72** may be controlled according to the embodiments disclosed in U.S. Patent No. 7,965,186 entitled "Passive RFID Elements having Visual Indicators," which is incorporated herein by reference in its entirety.

With continuing reference to **FIG. 4**, the control logic **70** controls or gates whether RF power is accessed from the power manager **44**. The control logic **70** contains circuitry to determine when the visual indicator **72** should be activated. If the visual indicator **72** should be activated, the control logic **70** accesses power from the power manager **44** to activate the visual indicator **72**. In this instance, the power required to activate the visual indicator **72** may be considered as part of the operational threshold power for the RFID IC **28** to be considered by the power manager **44** to determine if excess RF energy in RF power from the received wireless RF signals **32** is present according to block **52** in **FIG. 3**, previously described above. Alternatively, the power required to activate the visual indicator **72** may be considered an additional visual indicator threshold energy (e.g., includes minimum of 0.7 V) that is added to the operational threshold power for the RFID IC **28** for consideration of power requirements by the power manager **44** for RFID tag **20** operation. In either case, the power manager **44** can be configured to activate a visual indicator **72** with received RF power from the RFID tag antenna **26** if the RF power is sufficient for RFID IC **28** operation and visual indicator **72** operation. The power manager **44** can also be configured to activate a visual indicator **72** with accessed RF power from the energy storage device **36** if sufficient RF power is not available from the received wireless RF signals **32** for RFID IC **28** operation and visual indicator **72** operation.

With continuing reference to **FIG. 4**, an optional current limiter **74** may be provided between the control logic **70** and the visual indicator **72**. The current limiter **74** limits current accessed from the power manager **44** according to the specifications of the visual indicator **72** and conserves power access for the visual indicator **72**, as desired or needed. For example, it may not be required to access the maximum current possible to be accessed by the visual indicator **72** to provide sufficient light intensity for the RFID tag **20** to sufficiently indicate a status or other information to a human operator or technician.

To increase the maximum voltage attainable across the energy storage device **36**, an optional charge pump **76** may also be employed in the RFID IC chip **30**, as illustrated in **FIG. 4** As shown in **FIG. 4**, the charge pump **76** is coupled between the power manager **44** and the power import/export switch **42** in the power supply line **68** in this embodiment. For example, the charge pump **76** being at eighty percent (80%) efficiency may be able to take excess direct current (DC) currents available from the power manager **44** from the excess energy derived from excess received RF power and charge up the energy storage device **36** at twice the operational threshold voltage of the RFID IC **28** and with a current equal to half the RFID IC's **28** output current multiplied by the efficiency factor. For example, the charge pump **76** may take an input DC voltage of the excess power in the range of 1.0 - 1.5 V on the power supply line **68** and increase a DC output voltage of the excess RF power in the range of 2.0 - 3.0 VDC. The charge pump **76** may also be employed to provide a sufficient voltage in the energy storage device **36** to operate both the RFID IC **28** and the external visual indicator **72** for the visual indicator operation. The charge pump **76** may be desired or required to provide a high enough RF power voltage to operate both the RFID IC **28** and the external visual indicator **72**.

The RFID tag **20** in **FIG. 2** can be employed in applications to identify and track articles of manufacture. In this regard, the RFID tag **20** could be attached or integrated to a component to be identified and/or tracked. RFID technology can also be useful in mapping connections between connectors and adapters as part of a RFID tag connection system. For example, U.S. Patent Application Serial No. 13/418,752 filed on March 13, 2012 and entitled "Radio Frequency Identification (RFID) in Communication Connections, Including Fiber Optic Components," and incorporated herein by reference in its entirety, describes a RFID tag connection system between fiber optic connectors and adapters. A non-limiting example of such a RFID tag connection system **80** that can employ the RFID tag **20** in **FIG. 2** is illustrated in **FIG. 5**.

As illustrated in **FIG. 5**, two fiber optic connectors **82(1), 82(2)** each connected to respective fiber optic cables **84(1), 84(2),** are optically connected by connection to a fiber optic adapter **86**. The fiber optic connectors **82(1), 82(2)** and fiber optic adapter **86** in **FIG. 5** are duplex LC connectors and adapters, but could be any other type of connector and adapter. Each of the fiber optic connectors **82(1), 82(2)** contains a RFID tag **20(1), 20(2)**, as illustrated in **FIG. 5**. The fiber optic adapter **86** also contains a RFID tag **20(3)**, as illustrated in **FIG. 5**. The RFID tags **20(1)-20(3)** can be integrated into the housings **88(1), 88(2)** of the fiber optic connectors **82(1), 82(2)** and housing **90** of the fiber optic adapter **86**, respectively, as described in U.S. Patent Application Serial No. 12/774,898. The RFID tags **20(1)-20(3)** in this embodiment are like the RFID tag **20** in **FIG. 2** that contains the energy storage device **36** and power manager **44** in the RFID IC **28** to store excess energy derived from excess received RF power for operating the RFID tag **20** when sufficient external RF power is not being received by the RFID tag **20**.

With continuing reference to **FIG. 5**, and as also described in U.S. Patent Application Serial No. 12/774,898, the RFID tags **20(1)-20(3)** are also configured to be electrically connected to each other. In this manner, the RFID tags **20(1)-20(3)** can communicate with each other over electrical connections to exchange and store each other's identity information representative of connections between the fiber optic connectors **82(1), 82(2)** and the fiber optic adapter **86**. A RFID reader, such as the RFID reader **22** in **FIG.** 2, can interrogate the RFID tags **20(1)-20(3)** to obtain the exchanged identity information as being representative of connections. The RFID reader **22** (or other system that can communicate with the RFID reader **22**) can therefore track connections in addition to location and/or other information about the fiber optic connectors **82(1), 82(2)** and the fiber optic adapter **86**. However, if any of the RFID tags **20(1)-20(3)** are not receiving sufficient RF power for RFID tag operation and do not have enough stored energy in its energy storage device **36** for RFID tag operation, such RFID tag **20(1)-20(3)** would not be operational for exchanging and maintaining exchanged identity information with other operable RFID tags **20(1)-20(3)**. However, as discussed in more detail below, the energy storage devices **36** of the respective RFID tags **20(1)-20(3)** can be electrically coupled together to form a shared energy storage device when the fiber optic connectors **82(1), 82(2)** are connected to the fiber optic adapter **86** in **FIG. 5**, such that excess RF energy stored in any RFID's **20(1)-20(3)** energy storage devices **36** can be accessed by any other RFID tag **20(1)-20(3)** for operational power.

In this regard, **FIG. 6** is a schematic diagram illustrating the exemplary excess RF power storage and power sharing RFID tag connection system **80** (referred to herein as "RFID tag connection system **80**") in **FIG. 5** described above. The RFID tag connection system **80** includes the three RFID tags **20(1)-20(3)** previously referenced and described with regard to **FIG. 5**. Other components of the RFID tags **20(1)-20(3)** in the RFID tag connection system **80** in **FIG. 6** that are common to components in RFID tag **20** in **FIG. 2** are labeled with common element numbers, but noted with parenthesis (e.g., **20(2)**) to identify multiple versions.

As illustrated in **FIG. 6**, each RFID tag **20(1)-20(3)** has an associated energy storage device **36(1)-36(3)**. Each energy storage device **36(1)-36(3)** may have the same energy storage capacity or different energy storage capacities depending on design. The RFID tags **20(1)**, **20(3)** include conductors **90(1)**, **90(2)**, respectively, that are configured to electrically connect the energy storage devices **36(1)** and **36(3)** together when the fiber optic connector **82(1)** is connected to fiber optic adapter **86**. The RFID tags **20(2)**, **20(3)** also include conductors **90(4)**, **90(3)**, respectively, that are configured to electrically connect the energy storage devices **36(2)** and **36(3)** together when the fiber optic connector **82(2)** is connected to fiber optic adapter **86**. In this manner, these electrical connections couple the energy storage devices **36(1)-36(3)** together to form a shared energy storage device **92**. When a power manger **44(1)-44(3)** of a RFID tag **20(1)-20(3)** stores excess energy to or accesses stored energy from its associated energy storage device **36(1)-36(3)** as previously discussed, the excess RF energy or accessed stored energy is from shared energy storage device **92** sharing stored energy among each of the individual energy storage devices **36(1)-36(2)**. From the power managers' **44(1)-44(3)** perspectives, the shared energy storage device **92** is functionally equivalent to an individual energy storage device **36(1)-36(3)**.

Providing the shared energy storage device **92** allows a RFID tag **20(1)-20(3)** to continue to operate if not receiving sufficient RF power for RFID tag operation and not enough RF power is contained in its associated energy storage device **36(1)-36(3)**, but sufficient stored energy is contained in another energy storage device **36(1)-36(3)** that can be accessed for RFID operation. Providing a shared energy storage device **92** allows an increased capacity for storing excess RF energy. The capacitances provided in the RFID tags **20(1)-20(3)** do not have to be equal. For example, the total capacitance of the shared energy storage device **92** may be 81.6 μF, which includes a capacitance of 44 μF in the energy storage device **36(3)** in RFID tag **20(3)**, and capacitance from the energy storage devices **36(1)**, **36(2)** in RFID tags **20(1)**, **20(2)**, each having a capacitance of 18.8 μF as a non-limiting example. In this example, the capacitance provided in the energy storage device **36(3)** is greater than provided in the energy storage devices **36(1)** and **36(2)**, because there are two (2) visual indicators **72(3)(1)**, **72(3)(2)** provided in RFID tag **20(3)** that require additional power for operation not included in RFID tags **20(1)** and **20(2)**.

Also note that although each of the RFID tags **20(1)-20(3)** is shown in **FIG. 6** to include their own respective energy storage devices **36(1)-36(3)**, such is not required. Less than all of the RFID tags **20(1)-20(3)** in **FIG. 6** may include an energy storage device **36**. In this scenario, stored energy by one RFID tag **20** may be used to provide power to another RFID tag **20** that does not include any energy storage device **36** if the RFID tag **20** not including the energy storage device **36** is electrically connected to an energy storage device **36** of another RFID tag **20**.

To illustrate the exemplary performance of the RFID tag **20 in FIG. 2** and the RFID tag connection system **80** in **FIGS 5** and **6**, various graphs are provided in **FIGS. 7A-13** and are described below. **FIG. 7A** is a graph **100** illustrating exemplary charging current available to charge capacitors in various configurations of the shared energy storage device **92** in the RFID tag connection system **80 in FIGS. 5** and **6** as a function of RFID tag power margin. The graph **100** includes results while employing the optional charge pump **76** in the RFID IC **28**, as illustrated in **FIG. 4** and previously described above. The graph **100** has three curves: a first curve **102** representing data corresponding to only fiber optic adapter **86** in **FIG. 5** (i.e., RFID tag **20(3)**); a second curve **104** representing data corresponding to the fiber optic adapter **86** (i.e., RFID tag **20(3)**) and one fiber optic connector (i.e., RFID tag **20(1)** or RFID tag **20(2)**) in **FIG. 5**; and a third curve **106** representing data corresponding to the fiber optic adapter **86** (i.e., RFID tag **20(3)**) and both fiber optic connectors (i.e., RFID tag **20(1)** and RFID tag **20(2)**) in **FIG. 5**. The results in graph **100** show that the charging current to charge the shared energy storage device **92** is an increasing function with the RFID tag power margin, since more excess received RF power is captured with increasing RFID tag power margin and converted to charging current.

**FIG. 7B** is another graph **110** illustrating exemplary charging current available to charge capacitors in various configurations of the shared energy storage device **92** in the RFID tag connection system **80** in **FIGS. 5** and **6** as a function of RFID tag power margin. The graph **110** includes results when the optional charge pump **76** in the RFID IC **28** illustrated in **FIG. 4** is not employed. The graph **110** has three curves: a first curve **112** representing data corresponding to only fiber optic adapter **86** in **FIG. 5** (i.e., RFID tag **20(3)**); a second curve **114** representing data corresponding to the fiber optic adapter **86** (i.e., RFID tag **20(3)**) and one fiber optic connector (i.e., RFID tag **20(1)** or RFID tag **20(2)**) in **FIG. 5**; and a third curve **116** representing data corresponding to the fiber optic adapter **86** (i.e., RFID tag **20(3)**) and both fiber optic connectors (i.e., RFID tag **20(1)** and RFID tag **20(2)**) in **FIG. 5**. The results in graph **110** also show that the charging current to charge the shared energy storage device **92** is an increasing function with the RFID tag power margin, since more excess RF power is captured with increasing RFID tag power margin and converted to charging current. However, the results in graph **110** show more charging current available for charging the shared energy storage device **92** than in graph **100** since the charge pump **76** is not employed for the results in graph **110**. A tradeoff of providing increased voltage when employing the charge pump **76** is less current.

**FIG. 8A** is a graph **120** illustrating exemplary times to fully charge the shared energy storage device in the RFID tag connection system in **FIGS. 5** and **6** at start-up as a function of RFID tag power margin. The graph **120** includes results when the optional charge pump **76** in the RFID IC **28** illustrated in **FIG. 4** is employed. The graph **120** has three curves: a first curve **122** representing data corresponding to only fiber optic adapter **86** in **FIG. 5** (i.e., RFID tag **20(3)**); a second curve **124** representing data corresponding to the fiber optic adapter **86** (i.e., RFID tag **20(3)**) and one fiber optic connector (i.e., RFID tag **20(1)** or RFID tag **20(2)**) in **FIG. 5**; and a third curve **126** representing data corresponding to the fiber optic adapter **86** (i.e., RFID tag **20(3))** and both fiber optic connectors (i.e., RFID tag **20(1)** and RFID tag **20(2)**) in **FIG. 5**. While more charge current is available from multiple RFID tags **20(1)-20(3)**, the total amount of capacitance of the shared energy storage device **92** also increases with multiple RFID tags **20(1)-20(3)**. Thus, the results in graph **120** show that total charging time is similar for all three curves **122,124,126**.

With continuing reference to **FIG. 8A**, as an example, consider the case of 5 dB RFID tag power margin. For a single RFID adapter tag **20(2)**, it would take approximately thirty-one (31) seconds to fully charge up the capacitor bank **38** of the energy storage device **36(2)** mounted on the RFID tag **20(2)**. For the cases with one or two fiber optic connectors **82(1), 82(2)** connected into the fiber optic adapter **86**, if all RFID tags **20(1)-20(3)** have 5 dB margin, the total capacitor charge times for the shared energy storage device **92** would be approximately twenty-two (22) seconds and nineteen (19) seconds from start-up, respectively, as illustrated in **FIG. 8A**. For RFID tag power margins of 12 dB or greater, the capacitor charging time falls below ten (10) seconds for any of the three (3) scenarios, as shown in curves **122, 124, 126**.

**FIG. 8B** is a graph **130** illustrating exemplary times to fully charge the shared energy storage device in the RFID tag connection system in **FIGS. 5** and **6** at start-up as a function of RFID tag power margin. The graph **130** includes results when the optional charge pump **76** in the RFID IC **28** illustrated in **FIG. 4** is not employed. The graph **130** has three curves: a first curve **132** representing data corresponding to only fiber optic adapter **86** in **FIG. 5** (i.e., RFID tag **20(3)**); a second curve **134** representing data corresponding to the fiber optic adapter **86** (i.e., RFID tag **20(3)**) and one fiber optic connector (i.e., RFID tag **20(1)** or RFID tag **20(2)**) in **FIG. 5**; and a third curve **136** representing data corresponding to the fiber optic adapter **86** (i.e., RFID tag **20(3)**) and both fiber optic connectors (i.e., RFID tag **20(1)** and RFID tag **20(2)**) in **FIG. 5**. The time to fully charge the energy storage device **36(2)** and the shared energy storage device **92** is less than the results provided in graph **120** in **FIG. 8B**, because the charge pump **76** was not employed thereby providing more charge current.

When current is accessed from an energy storage device **36** or a shared energy storage device **92**, the current accessed is a function of the capacitor voltage level given by:

$$i_{IC} = P_{\min} / V_{cap} \, ,$$

where $P_{min}$ is 7.5 uW in this example. The results for the analysis of RFID IC **28** operational time for a fully charged energy storage device **36** or a shared energy storage device **92** are illustrated in **FIGS. 9A** and **9B** for four (4) possible configurations of the RFID tag connection system in **FIGS. 5** and **6**. **FIG. 9A** is a graph **140** illustrating exemplary times that certain connection combinations of RFID tags in the RFID tag **20** in **FIG. 2** and the RFID tag connection system **80** in **FIG. 5** can remain operational after losing RF power by accessing stored energy from the shared energy storage device **92**, when the charge pump **76** is employed. The graph **140** has four bars: a first bar **142** representing data corresponding to only fiber optic adapter **86** in **FIG. 5** (i.e., RFID tag **20(3)**); a second bar **144** representing data corresponding to the fiber optic adapter **86** (i.e., RFID tag **20(3)**) and one fiber optic connector (i.e., RFID tag **20(1)** or RFID tag **20(2)**) in **FIG. 5**; a third bar **146** representing data corresponding to the fiber optic adapter **86** (i.e., RFID tag **20(3)**) and both fiber optic connectors (i.e., RFID tag **20(1)** and RFID tag **20(2)**) in **FIG. 5**; and a fourth bar **148** representing data corresponding to only a fiber optic connector **82** in **FIG. 5** (i.e., RFID tag **20(1)** or **20(2)**). These results in bar **142** predict that the fiber optic adapter RFID tag **20(3)** alone may continue to operate for almost twenty-three (23) seconds after RF power is lost. This operation time is shorter for the other three cases represented by bars **144, 146,** and **148**, because while all RFID tags **20(1)-20(3)** require the same current to operate, the RFID tags **20(1), 20(2)** for the fiber optic connectors **82(1), 82(2)** contribute smaller capacitance in this example to the shared energy storage device **92** than the RFID tag **20(3)** for the fiber optic adapter **86**. Even so, the results suggest that the three RFID tags **20(1)-20(3)** can remain on for about fourteen (14) seconds using the stored charge in the shared energy storage device **92**, assuming a maximum voltage of 3.0 V.

**FIG. 9B** is a graph **150** illustrating exemplary times that certain connection combinations of RFID tags in the RFID tag **20** in **FIG. 2** and the RFID tag connection system **80** in **FIG. 5** can remain operational after losing RF power by accessing stored energy from the shared energy storage device **92** to provide power, when the charge pump **76** is not employed. The graph **150** has four bars: a first bar **152** representing data corresponding to only fiber optic adapter **86** in **FIG. 5** (i.e., RFID tag **20(3)**); a second bar **154** representing data corresponding to the fiber optic adapter **86** (i.e., RFID tag **20(3)**) and one fiber optic connector (i.e., RFID tag **20(1)** or RFID tag **20(2)**) in **FIG. 5**; a third bar **156** representing data corresponding to the fiber optic adapter **86** (i.e., RFID tag **20(3)**) and both fiber optic connectors (i.e., RFID tag **20(1)** and RFID tag **20(2)**) in **FIG. 5**; and a fourth bar **158** representing data corresponding to only a fiber optic connector **82** in **FIG. 5** (i.e., RFID tag **20(1)** or **20(2)**). The times that the RFID tags **20(1)-20(3)** remain operational is less than provided in the results in graph **140** in **FIG. 9A**, because the charge pump **76** was not employed to provide additional voltage in the energy storage device **36** or shared energy storage device **92**. Thus, the stored energy accessed from the energy storage devices **36** or shared energy storage device **92** brings the voltage of the energy storage devices **36** or shared energy storage device **92** down below the operational threshold voltage for RFID tag **20** operation sooner. However, as previously discussed, the advantage of not employing the charge pump **76** is less charging time for the energy storage devices **36** or shared energy storage device **92**.

**FIG. 10A** is a graph **160** illustrating exemplary energy storage device **36** voltage as a function of time for a single RFID tag, such as the RFID tag **20** in **FIG. 2**, from startup of the RFID tag during positive power margin times of the RFID tag. The results in graph **160** are when the charge pump **76** in **FIG. 4** is employed in the RFID IC **28**. The graph **160** shows that continuous operation of the RFID tag **20** is possible after the capacitor bank **38** of the energy storage device **36** becomes charged to a voltage level exceeding the RFID tag operational threshold voltage **162** (e.g., 1 V) required to operate the RFID IC **28**. As shown in **FIG. 10A**, the voltage across the capacitor bank **38** of the energy storage device **36** starts at 0 V when the RFID tag **20** is first turned on. The voltage gradually increases during the periods when the RFID tag **20** is exposed to the excess RF energy received by the RFID tag antenna **26** during positive power margin conditions. When the voltage of the capacitor bank **38** of the energy storage device **36** exceeds the RFID tag operational threshold voltage **162**, the energy storage device **36** can start to supply current to the RFID IC **28** for operation during the time periods when negative power margin conditions exist. If the voltage across the capacitor bank **38** of the energy storage device **36** exceeds a visual indicator threshold voltage **164**, both the RFID tag **20** and the visual indicators **72** in **FIG. 4** can be operational.

**FIG. 10B** is a graph **166** illustrating exemplary energy storage device **36** voltage as a function of time for a single RFID tag, such as the RFID tag **20** in **FIG. 2**, from start-up of the RFID tag during positive power margin times of the RFID tag. The results in graph **160** are when the charge pump **76** in **FIG. 4** is not employed in the RFID IC **28**. The graph **166** shows that continuous operation of the RFID tag **20** is possible after the capacitor bank **38** of the energy storage device **36** becomes charged to a voltage level exceeding the RFID tag operational threshold voltage **169** (e.g., 1 V) required to operate the RFID IC **28**. As shown in **FIG. 10B**, the voltage across the energy storage device **36** starts at 0 V when the RFID tag **20** is first turned on. The voltage gradually increases during the periods when the RFID tag **20** is exposed to the excess RF energy received by the RFID tag antenna **26** during positive power margin conditions. When the voltage of the energy storage device **36** exceeds the RFID tag operational threshold voltage **169**, the energy storage device **36** can start to supply current to the RFID IC **28** for operation during the time periods when negative power margin conditions exist. The voltage across the capacitor bank **38** of the energy storage device **36** does not exceed a visual indicator threshold voltage **168**, because the charge pump **76** in **FIG. 4** is not employed to increase the voltage of the excess energy stored in the energy storage device **36**.

As a further explanation of the benefit of the RFID tag connection system **80** with connective RFID tags **20(1)-20(3)** to provide shared energy storage device **92**, assume that four RFID reader antennas are switched from one to another sequentially by the RFID reader **22** in **FIG. 2** with a one (1) second dwell time for each RFID reader antenna. Further assume that RFID tag **20(1)** has a negative power margin with three (3) of the four (4) RFID reader **22** antennas and 19 dB power margin with the other RFID reader **22** antenna. Further assume RFID tag **20(2)** has negative power margin with all four (4) RFID reader **22** antennas. Further assume RFID tag **20(3)** has negative power margin with three (3) of the four (4) RFID reader **22** antennas and 16 dB power margin with the fourth RFID reader **22** antenna. The received RF power as a function of time for each of the three RFID tags **20(1)-20(3)** are shown in graphs **170, 172**, and **174** in **FIGS. 11A-11C** respectively. If these were conventional passive RFID tags, the RFID tags' **20(1)-20(3)** ON/OFF states would simply be dictated by whether the received RF power was above or below the -16 dBm power threshold. In that case, RFID tag **20(1)** and RFID tag **20(3)** would be off three (3) out of every four (4) seconds. RFID tag **20(2)** would never turn on, because RFID tag **20(2)** never receives enough RF power from the RFID reader **22** in this example.

**FIGS. 12A-12C** are graphs **180, 182, 184** illustrating exemplary on/off states of the three exemplary electrically connected RFID tags **20(1)-20(3),** respectively, as a function of time when the excess RF power storage and power sharing in the RFID tag connection system of **FIGS. 5** and **6** is employed. The voltage level of the capacitor bank **38** in the energy storage devices **36** is in excess of the RFID tag operational threshold voltage from thirteen (13) to fourteen (14) seconds. After this time, the capacitor bank **38** voltage is high enough to sustain all three RFID tags **20(1)-20(3)** during periods of RF power outage. The on/off states of the RFID tags **20(1)-20(3)** are shown in **FIGS. 12A-12C**, respectively, which show all RFID tags **20(1)-20(3)** being continuously operable after the time when the capacitor bank **38** voltage crosses the RFID tag operational threshold voltage. Even RFID tag **20(2)** will be continuously on after this time, although it has negative power margin with all four (4) RFID reader **22** antennas. RFID tag **20(2)** is sustained by the stored energy in the shared energy storage device **92**. This RFID tag connection system model in **FIGS. 12A-12C** illustrates behavior and performance that is not provided with conventional passive RFID tags.

**FIG. 13** is a graph **190** that illustrates a possible application of providing power from shared energy in the shared energy storage device **92** for the RFID tag connection system **80** in **FIGS. 5** and **6**. The application involves providing current for flashing a visual indicator **72** in **FIG. 4** attached to a RFID tag **20**. In this example, the graph **190** illustrates the maximum possible current that could be delivered by the capacitor bank **38** of the shared energy storage device **92** assuming a flash time of ten (10) milliseconds (ms) and a visual indicator **72** threshold voltage of 2.0 V. The results in graph **190** show that at around time = 40 seconds, there is positive potential current for a visual indicator **72** flash. After that at approximately time = 50 seconds, the maximum potential current stays above the desired two (2) milliamps (mA) visual indicator **72** current threshold **192**. Note that if the visual indicator **72** modeled in graph **190** is attached to the fiber optic adapter **86** in the RFID tag **20(3)** in the example of the RFID tag connection system **80**, the visual indicator **72** can be flashed via the shared energy storage device **92** even though RFID tag **20(3)** can have negative power margin with respect to all RFID reader **22** antennas.

The excess RF power storage and power sharing RFID tag connection systems disclosed herein can be employed in any application desired for continuous RFID tag operation. For example, **FIG. 14** is a schematic diagram of an exemplary communications system **200** that includes RFID tag connection systems **202(1)-202(3)** similar to the RFID tag connection system **80** in **FIGS. 5** and **6**. In this example, the RFID tag connection systems **202(1)-202(3)** each include only one fiber optic connector **82(1)** connected to the fiber optic adapter **86** to provide the shared energy storage device **92** (see **FIG. 6**). However, the principles and operation of the RF power storage and RF power sharing described above still applies in the RFID tag connection systems **202(1)-202(3)**.

With reference to **FIG. 14**, the communications system is a patch panel **204**. The patch panel **204** is configured to accept connection from fiber optic connectors **82(1)**. For example, the patch panel **204** may be provided in a fiber optic module containing the fiber optic adapters **86** each configured to receive the fiber optic connectors **82(1)** to establish optical connections. As previously discussed with regard to **FIG. 6**, the RFID tags **20(1), 20(3)** include conductors **90(1), 90(2)** that are configured to electrically connect the energy storage devices **36(1)** and **36(3)** together when the fiber optic connector **82(1)** is connected to fiber optic adapter **86**. These connections form a shared energy storage device that can be used by either RFID tags **20(1), 20(3)** in the fiber optic connector **82(1)** and fiber optic adapter **86**, respectively, to store excess energy derived from excess received RF power and share excess energy to provide power for RFID tag operation. Alternatively, the patch panel **204** may be electrical equipment wherein each of the fiber optic adapters **86** are electrical sockets configured to receive components in the form of electrical plugs to establish electrical connections.

The disclosed technologies can be configured in different ways, resulting in different functionalities. In addition to the examples provided above, the RFID tags disclosed herein may be located on a plug (such as a connector), a socket (such as an adapter), a housing, a cabinet, an equipment rack, a component or patch panel, a separate object, or other components (or portions thereof). Further, although examples of components employing the excess RF power storage and power sharing RFID tags and RFID tag connections systems are employed with electrical and/or optical equipment, component assemblies, and cables, the components disclosed herein can be associated with any type of articles of manufacture for any type of application. For example, components with excess RF power storage and power sharing RFID tags and RFID tag connection systems may be integrated at or near various interconnection locations and articles of manufacture along an electrical or optical network, at or near various interconnection locations along a utility distribution system, such as distribution systems dedicated to energy (e.g., electric power, oil, natural gas), information (telephone, cable, DSL or internet access) or water and sewer service. This network can be incorporated into any system, such as an automobile electrical harness; an optical network for an airplane, ship or ground-based transportation system; a control network for railroad switchgear; or a LAN integrated into a building. Components with excess energy storage and energy sharing RFID tags and RFID tag connection systems can also be integrated at or near various interconnection locations and articles of manufacture along a utility distribution system, such as distribution systems dedicated to energy (e.g., electric power, oil, natural gas), information (telephone, cable, DSL or internet access) or water and sewer services. Components with the excess energy storage and energy sharing RFID tags and RFID tag connection systems could be temporarily installed networks and interconnection systems and articles of manufacture such as fire hoses, sports or performance events, or power and communications networks associated with military deployment. Other applications include specific locations across a two-dimensional (2D) array of panels, examples of which include floor tiles with temperature or pressure sensors for building security or environmental control, ceiling tiles with integrated motion or fire sensors, or load sensors integrated into modular sections that are assembled to create floors, roofs, roads or bridges.

Any functionalities disclosed in any embodiments may be incorporated or provided in any other embodiments with suitable circuitry and/or devices. Although the illustrated embodiments are directed to excess RF power storage and power sharing passive RFID tags and passive RFID tag connection systems, further embodiments include one or more semi-passive or active RFID tags depending upon the particular functionality of the excess RF power storage and power sharing RFID tag connection system desired. The excess RFID RF power storage and power sharing RFID tags can also be employed in any application desired, including but not limited to fiber optic connectors, optical fiber cables and cable assemblies, fiber optic cable management hardware and devices, electrical connectors, medical devices, pharmaceutical containers, credit cards, employee badges, facility entry devices, fluid couplings, beverage dispensing containers, industrial controls, environmental monitoring devices, connection of consumer electronics, electronics assemblies and subassemblies, containers and lids, doors and doorframes, windows and sills, and many other applications.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. Electrical coupling can include both internal and external coupling or accessibility. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a processor, a DSP, an Application Specific Integrated Circuit (ASIC), an FPGA or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in volatile memory, non-volatile memory, Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art would also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Many modifications and other embodiments of the embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. It is intended that the embodiments cover the modifications and variations of the embodiments provided they come within the scope of the appended claims. Although specific terms are employed herein, they are used in a generic and descriptive sense only and not for purposes of limitation.

**Claims**

1. A radio-frequency identification RFID tag (20), comprising:

    an integrated circuit IC (28);
    an antenna (26) electrically coupled to the IC (28), the antenna (26)configured to receive RF power from received wireless RF signals (32); an energy storage device (36) coupled to the IC (28); and a power manager (44) configured to receive the RF power received by the antenna (26); the power manager (44) further configured to:

> operate the IC (28) with the received RF power if the received RF power meets or exceeds an operational threshold power for the IC (28); and characterized to store excess energy derived from excess received RF power in the energy storage device (36) if the received RF power exceeds the operational threshold power for the IC (28); access the stored excess energy in the energy storage device (36) to provide power to operate the IC (28) if the received RF power from the antenna (26) is less than the operational threshold power for the IC (28) and when the RFID tag (20) is not receiving wireless RF signals from a RFID reader (22).

2.  The RFID tag of claim 1, further comprising a power import/export switch (42) coupled to the power manager (44), the power import/export switch (42) having an energy storage setting and an energy access setting, the power manager (44) further configured to:

> set the power import/export switch (42) to the energy storage setting to direct excess energy derived from the excess received RF power to the energy storage device (36) if the received RF power meets or exceeds the operational threshold power for the IC (28); and set the power import/export switch (42) to the energy access setting to access the stored excess energy in the energy storage device (36) to provide power to operate the IC (28) if the received RF power from the antenna (26) is less than the operational threshold power for the IC (28).

3.  The RFID tag of claim 1, wherein the IC (28) is further configured to access the stored excess energy in the energy storage device (36) to provide power to operate the IC (28) to detect a condition relating to the RFID tag (20) detected by a condition responsive device coupled to the IC (28).

4.  The RFID tag of claim 1, wherein the power manager (44) is configured to store the excess energy when a voltage derived from the excess received RF power exceeds an operational threshold voltage for the IC (28).

5.  The RFID tag of claim 1, further comprising a power rectifier (60) configured to receive the RF power from the antenna (26) and rectify the received RF power into a rectified voltage; wherein the power manager (44) is configured to operate the IC (28) with the rectified voltage if the rectified voltage meets or exceeds an operational threshold voltage for the IC (28).

6.  The RFID tag of claim 5, wherein the power manager (44) is configured to operate the IC (28) with current derived from the power rectifier (60) if the current meets or exceeds an operational threshold current for the IC (28).

7.  The RFID tag of claim 5, further comprising a charge pump (76) configured to receive the rectified voltage from the power rectifier (60) and increase voltage of the rectified voltage stored in the energy storage device (36).

8.  The RFID tag of claim 1, further comprising a visual indicator (72) electrically coupled to the IC (28), wherein the power manager (44) is further configured to activate the visual indicator (72) with received RF power from the antenna (26) if the received RF power exceeds an operational threshold power.

9.  The RFID tag of claim 1, further comprising one or more communications conductors coupled to the IC (28); wherein the IC (28) is further configured to communicate with a second IC of a second RFID tag when the one or more communications conductors are connected to one or more communications conductors of the second RFID tag.

10. The RFID tag of claim 1, further comprising one or more energy sharing conductors coupled to the energy storage device (36); wherein the energy storage device (36) is further configured to provide power from stored energy to a second RFID tag when the one or more energy sharing conductors are connected to one or more energy sharing conductors of the second RFID tag (20).

11. The RFID tag of claim 1 comprised of a passive RFID tag or a semi-active RFID tag comprised of a battery for operation, wherein the energy storage device (36) is comprised of the battery.

12. A method of providing power for radio-frequency identification RFID tag operation, comprising:

> receiving wireless RF signals (32) including RF power by an antenna (26) coupled to an integrated circuit IC (28);
operating the IC (28) with the received RF power if the received RF power meets or exceeds an operational threshold power for the IC (28); and **characterized by**
storing excess energy derived from excess received RF power in an energy storage device (36) if the received RF power exceeds the operational threshold power for the IC (28); and accessing the stored excess energy in the energy storage device (36) to provide power to operate the IC (28) if the received RF power from the antenna (26) is less than the operational threshold power for the IC (28) and when the RFID tag (20) is not receiving wireless RF signals from a RFID reader (22).

**Patentansprüche**

1.  RFID-Tag (20) zur Hochfrequenz-Identifikation, umfassend:

    eine integrierte Schaltung IC (28);
    eine Antenne (26), die elektrisch mit der IC (28) gekoppelt ist, wobei die Antenne (26) konfiguriert ist, um HF-Leistung von empfangenen drahtlosen HF-Signalen (32) zu empfangen;
    eine Energiespeichervorrichtung (36), die mit der IC (28) gekoppelt ist; und
    und einen Leistungsmanager (44), der konfiguriert ist, um die von der Antenne (26) empfangene HF-Leistung zu empfangen;
    wobei der Leistungsmanager (44) ferner konfiguriert ist, um:

    die IC (28) mit der empfangenen HF-Leistung zu betreiben, wenn die empfangene HF-Leistung eine Betriebsschwellenleistung für die IC (28) erreicht oder überschreitet; und
    **gekennzeichnet durch** das Speichern überschüssiger Energie in der Energiespeichervorrichtung (36), die von überschüssiger empfangener HF-Leistung abgeleitet wird, wenn die empfangene HF-Leistung die Betriebsschwellenleistung für die IC (28) überschreitet;
    Zugreifen auf die gespeicherte überschüssige Energie in der Energiespeichervorrichtung (36), um Energie für den Betrieb der IC (28) bereitzustellen, wenn die empfangene HF-Leistung von der Antenne (26) kleiner als die Betriebsschwellenleistung für die IC (28) ist und wenn das RFID-Tag (20) keine drahtlosen HF-Signale von einem RFID-Lesegerät (22) empfängt.

2.  RFID-Tag nach Anspruch 1, ferner umfassend einen mit dem Leistungsmanager (44) gekoppelten Stromaufnahme-/Ausgabeschalter (42), wobei der Stromaufnahme-/Ausgabeschalter (42) eine Energiespeichereinstellung und eine Energiezugriffsseinstellung aufweist, wobei der Leistungsmanager (44) ferner konfiguriert ist um:

    den Stromaufnahme-/Ausgabeschalter (42) auf die Energiespeichereinstellung einzustellen, um überschüssige Energie, die von der überschüssigen empfangenen HF-Leistung abgeleitet ist, an die Energiespeichervorrichtung (36) zu leiten, wenn die empfangene HF-Leistung die Betriebsschwellenleistung für die IC (28) erreicht oder überschreitet; und
    und den Stromaufnahme-/Ausgabeschalter (42) auf die Energiezugriffsseinstellung einzustellen, um auf die gespeicherte überschüssige Energie in der Energiespeichervorrichtung (36) zuzugreifen, um Energie für den Betrieb der IC (28) bereitzustellen, wenn die empfangene HF-Leistung von der Antenne (26) geringer ist als die Betriebsschwellenleistung für die IC (28).

3.  RFID-Tag nach Anspruch 1, wobei die IC (28) ferner konfiguriert ist, um auf die gespeicherte überschüssige Energie in der Energiespeichervorrichtung (36) zuzugreifen, um Strom zum Betreiben der IC (28) bereitzustellen, um einen Zustand in Bezug auf den RFID-Tag (20) zu erfassen, der von einer zustandsabhängigen Vorrichtung erfasst wird, die mit der IC (28) gekoppelt ist.

4.  RFID-Tag nach Anspruch 1, wobei der Leistungsmanager (44) konfiguriert ist, um die überschüssige Energie zu speichern, wenn eine aus der überschüssigen empfangenen HF-Leistung abgeleitete Spannung eine Betriebsschwellenspannung für die IC (28) überschreitet.

5.  RFID-Tag nach Anspruch 1, ferner umfassend einen Leistungsgleichrichter (60), der konfiguriert ist, um die HF-Leistung von der Antenne (26) zu empfangen und die empfangene HF-Leistung in eine gleichgerichtete Spannung gleichzurichten;
    wobei der Leistungsmanager (44) konfiguriert ist, um die IC (28) mit der gleichgerichteten Spannung zu betreiben, wenn die gleichgerichtete Spannung eine Betriebsschwellenspannung für die IC (28) erreicht oder überschreitet.

6.  RFID-Tag nach Anspruch 5, wobei der Leistungsmanager (44) konfiguriert ist, um die IC (28) mit Strom zu betreiben, der von dem Leistungsgleichrichter (60) abgeleitet ist, wenn der Strom eine Betriebsschwellenleistung für die IC (28) erreicht oder überschreitet.

**7.** RFID-Tag nach Anspruch 5, ferner umfassend eine Ladepumpe (76), die konfiguriert ist, um die gleichgerichtete Spannung von dem Leistungsgleichrichter (60) zu empfangen und die Spannung der gleichgerichteten Spannung zu erhöhen, die in der Energiespeichervorrichtung (36) gespeichert ist.

**8.** RFID-Tag nach Anspruch 1, ferner umfassend eine visuelle Anzeige (72), die elektrisch mit der IC (28) gekoppelt ist, wobei der Leistungsmanager (44) ferner konfiguriert ist, um die visuelle Anzeige (72) mit empfangener HF-Leistung von der Antenne (26) zu aktivieren, wenn die empfangene HF-Leistung eine Betriebsschwellenleistung überschreitet.

**9.** RFID-Tag nach Anspruch 1, ferner umfassend einen oder mehrere mit der IC (28) gekoppelte Kommunikationsleiter; wobei die IC (28) ferner konfiguriert ist, um mit einer zweiten IC eines zweiten RFID-Tags zu kommunizieren, wenn der eine oder die mehreren Kommunikationsleiter mit einem oder mehreren Kommunikationsleitern des zweiten RFID-Tags verbunden sind.

**10.** RFID-Tag nach Anspruch 1, ferner umfassend einen oder mehrere Energieverteilungsleiter, die mit der Energiespeichervorrichtung (36) gekoppelt sind; wobei die Energiespeichervorrichtung (36) ferner konfiguriert ist, um Strom aus gespeicherter Energie an einen zweiten RFID-Tag bereitzustellen, wenn der eine oder die mehreren Energieverteilungsleiter mit einem oder mehreren Energieverteilungsleitern des zweiten RFID-Tags (20) verbunden sind.

**11.** RFID-Tag nach Anspruch 1, umfassend einen passiven RFID-Tag oder einen semiaktiven RFID-Tag, umfassend eine Batterie zum Betrieb, wobei die Energiespeichervorrichtung (36) aus der Batterie besteht.

**12.** Verfahren zum Bereitstellen von Energie für den Betrieb von RFID-Tags mit Hochfrequenz-Identifikation, umfassend:

Empfangen von drahtlosen HF-Signalen (32), die HF-Leistung beinhalten, über eine Antenne (26), die mit einer integrierten Schaltung IC (28) gekoppelt ist; Betreiben der IC (28) mit der empfangenen HF-Leistung, wenn die empfangene HF-Leistung eine Betriebsschwellenleistung für die IC (28) erreicht oder überschreitet; und **gekennzeichnet durch** das Speichern überschüssiger Energie in der Energiespeichervorrichtung (36), die von überschüssiger empfangener HF-Leistung abgeleitet wird, wenn die empfangene HF-Leistung die Betriebsschwellenleistung für die IC (28) überschreitet; und

Zugreifen auf die gespeicherte überschüssige Energie in der Energiespeichervorrichtung (36), um Energie für den Betrieb der IC (28) bereitzustellen, wenn die empfangene HF-Leistung von der Antenne (26) kleiner als die Betriebsschwellenleistung für die IC (28) ist und wenn das RFID-Tag (20) keine drahtlosen HF-Signale von einem RFID-Lesegerät (22) empfängt.

## Revendications

**1.** Étiquette d'identification par radiofréquence, RFID (20), comprenant :

un circuit intégré, CI (28) ; une antenne (26) couplée électriquement au CI (28), l'antenne (26) étant configurée pour recevoir une puissance RF des signaux RF sans fil reçus (32) ; un dispositif de stockage d'énergie (36) couplé au CI (28) ; et un gestionnaire de puissance (44) configuré pour recevoir la puissance RF reçue par l'antenne (26) ; le gestionnaire de puissance (44) est en outre configuré pour :

faire fonctionner le CI (28) grâce à la puissance RF reçue si celle-ci atteint ou dépasse une puissance seuil de fonctionnement pour le CI (28) ; et caractérisé pour stocker l'énergie excédentaire dérivée de la puissance RF reçue en excès dans le dispositif de stockage d'énergie (36) si la puissance RF reçue dépasse la puissance seuil de fonctionnement pour le CI (28) ; accéder à l'énergie excédentaire stockée dans le dispositif de stockage d'énergie (36) pour fournir l'énergie nécessaire au fonctionnement du CI (28) si la puissance RF reçue de l'antenne (26) est inférieure à la puissance seuil de fonctionnement du CI (28) et lorsque l'étiquette RFID (20) ne reçoit pas de signaux RF sans fil d'un lecteur RFID (22).

**2.** Étiquette RFID selon la revendication 1, comprenant en outre un commutateur d'importation/d'exportation de puissance (42) couplé au gestionnaire de puissance (44), le commutateur d'importation de puissance/d'exportation de puissance (42) comportant un réglage de stockage d'énergie et un réglage d'accès à l'énergie, le gestionnaire de puissance (44) étant en outre configuré pour :

régler le commutateur d'importation/d'exportation de puissance (42) sur le réglage de stockage d'énergie pour diriger l'énergie excédentaire dérivée de la puissance RF reçue en excès vers le dispositif de stockage d'énergie (36) si la puissance RF reçue atteint ou dépasse la puissance seuil de fonctionnement du CI (28) ; et régler le commutateur d'importation/d'exportation d'alimentation (42) sur le réglage d'accès à l'énergie pour accéder à l'énergie excédentaire stockée dans le dispositif de stockage d'énergie (36) pour fournir l'énergie nécessaire au fonctionnement du CI (28) si la puissance RF reçue de l'antenne (26) est inférieure à la puissance seuil de fonctionnement du CI (28).

**3.** Étiquette RFID selon la revendication 1, dans laquelle le CI (28) est en outre configuré pour accéder à l'énergie excédentaire stockée dans le dispositif de stockage d'énergie (36) pour fournir l'énergie nécessaire au fonctionnement du CI (28) afin de détecter un état relatif à l'étiquette RFID (20) détecté par un dispositif sensible à un état couplé au CI (28).

**4.** Étiquette RFID selon la revendication 1, dans laquelle le gestionnaire de puissance (44) est configuré pour stocker l'énergie excédentaire lorsqu'une tension dérivée de l'excès de puissance RF reçue dépasse une tension seuil de fonctionnement du CI (28).

**5.** Étiquette RFID selon la revendication 1, comprenant en outre un redresseur de puissance (60) configuré pour recevoir la puissance RF de l'antenne (26) et redresser la puissance RF reçue en une tension redressée ; dans laquelle le gestionnaire de puissance (44) est configuré pour faire fonctionner le CI (28) grâce à la tension redressée si la tension redressée atteint ou dépasse une tension seuil de fonctionnement du CI (28).

**6.** Étiquette RFID selon la revendication 5, dans laquelle le gestionnaire de puissance (44) est configuré pour faire fonctionner le CI (28) grâce à un courant dérivé du redresseur de puissance (60) si le courant atteint ou dépasse un courant seuil de fonctionnement du CI (28).

**7.** Étiquette RFID selon la revendication 5, comprenant en outre une pompe de charge (76) configurée pour recevoir la tension redressée provenant du redresseur de puissance (60) et augmenter la tension de la tension redressée stockée dans le dispositif de stockage d'énergie (36).

**8.** Étiquette RFID selon la revendication 1, comprenant en outre un indicateur visuel (72) couplé électriquement au CI (28), dans laquelle le gestionnaire de puissance (44) est en outre configuré pour activer l'indicateur visuel (72) grâce à une puissance RF reçue de l'antenne (26) si la puissance RF reçue dépasse une puissance seuil de fonctionnement.

**9.** Étiquette RFID selon la revendication 1, comprenant en outre un ou plusieurs conducteurs de communication couplés au CI (28) ; dans laquelle le CI (28) est en outre configuré pour communiquer avec un second CI d'une seconde étiquette RFID lorsque le ou les conducteurs de communication sont connectés à un ou plusieurs conducteurs de communication de la seconde étiquette RFID.

**10.** Étiquette RFID selon la revendication 1, comprenant en outre un ou plusieurs conducteurs de partage d'énergie couplés au dispositif de stockage d'énergie (36) ; dans laquelle le dispositif de stockage d'énergie (36) est en outre configuré pour fournir de l'énergie provenant de l'énergie stockée à une seconde étiquette RFID lorsque le ou les conducteurs de partage d'énergie sont connectés à un ou plusieurs conducteurs de partage d'énergie de la seconde étiquette RFID (20).

**11.** Étiquette RFID selon la revendication 1, comprenant une étiquette RFID passive ou une étiquette RFID semi-active constituée d'une batterie destinée au fonctionnement, dans laquelle le dispositif de stockage d'énergie (36) est constitué de la batterie.

**12.** Procédé de fourniture d'énergie destinée au fonctionnement d'étiquette RFID d'identification par radiofréquence, consistant à :

recevoir des signaux RF sans fil (32) comprenant une puissance RF par une antenne (26) couplée à un CI (28) ; faire fonctionner le CI (28) grâce à la puissance RF reçue si celle-ci atteint ou dépasse une puissance seuil de fonctionnement du CI (28) ; et **caractérisé par** le stockage de l'énergie excédentaire dérivée de la puissance RF reçue en excès dans un dispositif de stockage d'énergie (36) si la puissance RF reçue dépasse la puissance seuil de fonctionnement du CI (28) ; et accéder à l'énergie excédentaire stockée dans le dispositif de stockage d'énergie (36) pour fournir l'énergie nécessaire au fonctionnement du CI (28) si la puissance RF reçue de l'antenne (26) est inférieure à la puissance seuil de fonctionnement du CI (28) et lorsque l'étiquette RFID (20) ne reçoit pas de signaux RF sans fil d'un lecteur RFID (22).

FIG. 1

FIG. 2

START–UP CONDITION:
SUFFICIENT
RF POWER RECEIVED
IN WIRELESS RF SIGNALS (32)
TO INITIATE
RFID IC (28)
OPERATION

50

RF POWER >
OPERATIONAL
THRESHOLD POWER
FOR RFID IC (28)
OPERATION?

52

YES

NO

54

OPERATE RFID IC (28)
AND PROVIDE ANY
EXCESS RF POWER TO
CHARGE ENERGY
STORAGE DEVICE (36)

56

DRAW POWER
FROM ENERGY
STORAGE DEVICE (36)
TO OPERATE
RFID IC (28)

FIG. 3

EP 2 973 237 B1

TO RFID ANTENNA(S) (26)

FIG. 4

23

FIG. 5

EP 2 973 237 B1

FIG. 6

EP 2 973 237 B1

25

*FIG. 7A*

EP 2 973 237 B1

FIG. 7B

EP 2 973 237 B1

FIG. 8A

FIG. 8B

FIG. 9A

FIG. 9B

*FIG. 10A*

EP 2 973 237 B1

*FIG. 10B*

EP 2 973 237 B1

FIG. 11A

FIG. 11C

FIG. 11B

RECEIVED RF POWER BY RFID TAG
ANTENNA (26(1)) (dBm)

RECEIVED RF POWER BY RFID TAG
ANTENNA (26(3)) (dBm)

RECEIVED RF POWER BY RFID TAG
ANTENNA (26(2)) (dBm)

TIME (SEC)

FIG. 12A

FIG. 12B

FIG. 12C

*FIG. 13*

EP 2 973 237 B1

FIG. 14

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 83707413 A
- US 61710843 A
- US 36380812 A
- US 41534309 A
- US 36385112 A
- US 36389012 A
- US 41875212 A

- US 59037706 A
- US 20110147468 A1
- US 20090088077 A1
- US 590377 A
- US 7965186 B
- US 774898 A